# EUROPEAN PATENT APPLICATION

(11) **EP 4 401 385 A1**
(43) Date of publication of application: **17.07.2024**
(21) Application number: 22863633.8
(22) Date of filing: 02.09.2022
(51) Int. Cl.: H04L 67/025, H04M 1/725, G06F 21/88

(54) **IMPLEMENTATION METHOD FOR REMOTE CONTROL AFTER THEFT OF MOBILE PHONE**

(30) Priority: 06.09.2021 CN 202111040462; 11.10.2021 CN 202111184038
(71) Applicant: Xie, Wenwu, Shenzhen, Guangdong 518000 (CN)
(72) Inventor: Xie, Wenwu, Shenzhen, Guangdong 518000 (CN)
(74) Representative: Mirlach, Xiaolu
(86) International application number: PCT/CN2022/116825
(87) International publication number: WO 2023/030499

(57) **Abstract**

The present invention discloses an implementation method for remote control of mobile phone after theft of mobile phone, addressing the current situation where, in the existing mobile phone cloud account positioning technology, even if the location of a stolen mobile phone is obtained, it is difficult to make the illegal possessor return it. Innovative thinking is used to supplement and technologically upgrade the existing functions of the mobile phone cloud account. The specific solution is to expand multiple remote-control menus and signaling for the mobile phone on the mobile phone cloud account client and develop corresponding running programs on the mobile phone side. In this manner, after the legal owner confirms the theft of the mobile phone and logs into the cloud account, according to the information sent by the stolen mobile phone and received by the system, the legal owner selectively sends control signaling to the stolen mobile phone, and the stolen mobile phone receives the control signaling to activate the corresponding program, achieving the purpose of the legal owner remotely controlling the stolen mobile phone and forcing the illegal possessor to abandon the intention of appropriating the stolen mobile phone. The present invention also involves the quick guide setting of the mobile phone cloud account, the setting of the loss report number, and the use of voice robots to prevent harassing calls, bringing a convenient intelligent technology experience to mobile phone users.

## Description

The present application claims the partial priority of Chinese Patent Application Nos. 202111040462.2 filed on September 6, 2021, entitled "Confidential loss-reporting and anti-theft mobile phone and system that is automatically bindable and quickly registerable" and 202111184038.5 filed in October 11, 2021, entitled "Fully smart security mobile phone and anti-theft subscriber card to avoid theft and loss", submitted to the China Patent Office, the relevant content of which is incorporated into this application by reference.

### Technical field

The present invention belongs to the technical field of anti-theft security of mobile phones, and specifically belongs to the expansion of the mutual correlation technology of mobile phones and their cloud accounts. By expanding the technology, the present invention realizes that even if the mobile phone is not with the owner, it can be remotely controlled by the owner in multiple ways, thereby making the mobile phone less afraid of being lost and stolen and reducing harassment calls.

### Background technique

The rapid development of communication technology has made mobile phones an indispensable tool for people to carry around. Although the number of mobile phone thefts has decreased, unpreventable losses still occur from time to time. After a mobile phone with the existing technology is stolen, it is possible to find the person holding the mobile phone based on the mobile phone cloud account positioning technology. Although some accidentally lost mobile phones are picked up by well-meaning people and returned to their owners, there are still many lost mobile phones that are illegally appropriated by profit-seeking people and even refuse to return them after being discovered. For greedy people who are far away and refuse to return the stolen phones, existing mobile phone security technologies are usually difficult to deal with, causing the owner to watch the movement of the stolen phone without being able to recover it, and because the information is exposed, some people will be deceived or more harassed.

### Summary

### Technical problem

Existing mobile phone cloud account search technology also has problems such as cumbersome registration and login processes, monotonous actual tracking functions that make it difficult to play an effective role, mobile phone side accounts that cannot be automatically reset after logging out, and cloud account login passwords that are not frequently used are easy to forget. In addition, current mobile phone anti-harassment call technology is not ideal.

### Technical solution

In order to solve the above problems, the present invention proposes a method for realizing remote control of a stolen mobile phone in view of the existing technical defects of mobile phone security. The steps of this method are as follows:
For mobile phones that have registered a cloud account and logged into the mobile phone of the cloud account (mobile phone side account), when the owner confirms that the mobile phone is stolen, log in to the cloud account on a computer device or other mobile phone, and operate the cloud account to send control signals to the stolen mobile phone according to the information and the system's suggestions obtained by the cloud account about the stolen mobile phone;
The stolen mobile phone receives the control signaling and executes the corresponding remote control program for the mobile phone;
The remote control program for the described mobile phone includes at least one of the mobile phone being reported lost (controlled to report loss), being automatically enabled for location sharing, being remotely set, being pushed information, being collaboratively shared with cloud account screen mirroring, being called and/or being intercommunicated, being listened, being monitored, being one-way smoothly connected. The mobile phones include physical subscriber identity module (SIM) cards mobile phones, virtual subscriber identity module (SIM) cards mobile phones, and physical plus virtual subscriber identity module (SIM) cards mobile phones.

The remote control program for the described mobile phone can also be a combination of the above programs, or a combination of the above programs with some existing technology.

According to the above implementation method, the cloud account also includes a mobile phone theft prevention guide or instructions for using the cloud account to control the mobile phone. After the owner confirms that the mobile phone is stolen, he can log in to the cloud account to see the instructions; further, the cloud account also includes intelligent information push, giving system suggestions based on information related to stolen mobile phones obtained by the cloud account.

It should be noted that the remote control program for the described mobile phone is not limited to the above programs, such as remote connection to the network, and can also be one, two, or all of the above programs, or other programs that are not yet available in the existing technology but are controlled by the cloud account. The remote control program for the described mobile phone is basically corresponding to the control menu in the cloud account. If there is function merging (such as merging the self-activated location sharing into the mobile phone being reported lost), it may be not one-to-one correspondence. In addition, if the function settings in the mobile phone are increased and refined, and the function of collaboratively sharing with cloud account screen mirroring is activated first, the duplicated functions in the remote control settings of the mobile phone can no longer be listed separately.

It needs to be emphasized that although the starting point of the above-mentioned mobile phone remote control program is from mobile phone security, its actual function and future function development are not limited to mobile phone security, such as care and control of children's mobile phones, care and control of the elder's mobile phones, etc. The present invention is not discussed in detail.

According to the above implementation method, the control signal includes signal instructions and push information. The signal instructions include single instructions and concurrent instructions. The push information includes text, pictures, voice and video information.

According to the above implementation method, the mobile phone is reported lost, including that after the mobile phone side account receives the loss report instruction sent by the cloud account, the mobile phone enters the loss report state. When the mobile phone is detected to be used, it automatically takes a photo and sends the loss report information to the cloud account.

Or further, according to the above implementation method, after the mobile phone enters the loss report state (before illegally replacing the card), it can dial the number but cannot disabling dialing and sending of any phone numbers except a phone number on a home screen or a public emergency contact phone number, and send the dialed numbers to the cloud account and/or the loss report number.

According to the above implementation method, the mobile phone is detected to use automatic taking of pictures and sends loss report information to the cloud account. This includes when the mobile phone detects that it is tilted to a certain angle (high chance for taking photo but low chance of getting a face photo), when it is manually grasped and maintained in a static position, or when the power button, HOME button is pressed, or when it receives a specific incoming call (including an alarm sent by the cloud account) or message (including a message pushed by the cloud account), or when the mobile phone is turned on or the screen is displayed as being scrolled or clicked, it automatically takes photos and sends loss report information to the cloud account, etc. It is not limited to the above. For folding phones, "being used" also includes when the phone is flipped open.

According to the above implementation method, the mobile phone automatically activates location sharing. After the mobile phone side account receives the corresponding control instruction, the mobile phone sends a location sharing request to the cloud account or associated mobile phone side account or social account. Currently, compared to sending a location sharing request to a cloud account, the implementation steps involved in sending a location sharing request to associated mobile phone side accounts or social accounts (e.g., WeChat, QQ, etc.) are more complicated.

According to the above implementation method, the remote control settings of the mobile phone include the owner modifying the emergency loss report number on the cloud account client, the owner modifying the battery power shutdown threshold of the mobile phone on the cloud account client to remotely control the mobile phone, and the owner modifying parameters such as the automatic invisible power-on time of the mobile phone on the cloud account client to remotely control the mobile phone. In the future, as the functions of mobile phones increase, added functions or modification of the setting parameters in related functions can also be remotely set. For example, under special circumstances, the owner can try to control a stolen mobile phone to coordinate with surrounding mobile phones across screens, remotely control nearby electrical appliances, etc.

According to the above implementation method, the system corresponding to the cloud account includes a mobile phone manufacturer side and a mobile phone cloud account client. The mobile phone cloud account client includes a multi-level management login interface, corresponding multi-task menus and/or multi-level pages, the mobile phone cloud account client includes a menu for remotely controlling the mobile phone and/or a pop-up box that guides the corresponding control steps.

According to the above implementation method, the client of the phone cloud account includes a dynamic menu of the phone, which stores a certain amount of received photos, videos, locations and other information in a cyclic manner, and automatically deletes the information after the expiration in a cyclic manner.

According to the above implementation method, the mobile phone cloud account client includes a one-click networking alarm function.

According to the above implementation method, the cloud account client also includes at least one of instructions for control suggestions after the mobile phone is stolen, corresponding information push, corresponding parameter setting signaling push, a function menu for sending loss report instructions to the mobile phone side account, and sending the location sharing command function menu to the mobile phone side account, the function of one-way initiating calls and/or mobile phone intercommunication, collaborative sharing with mobile phone screen mirroring, and activating mobile phone listening, monitoring, and one-way smooth connection functions when conditions are met.

According to the above implementation method, the cloud account uses multiple emergency contact mobile phones that have been stored in the cloud account to jointly request verification login.

The above is a method for realizing the remote control of stolen mobile phones, which is proposed in view of the existing technical defects of security of the mobile phone itself. This method mainly involves mobile phone cloud accounts, but the existing mobile phone cloud accounts still have problems such as cumbersome registration and login processes, the inability of mobile phone accounts to automatically reset after logging out, and the difficulty of remembering login passwords for infrequently used cloud accounts. To this end, the present invention provides a mobile phone anti-theft implementation method for quickly registering a cloud account for reporting loss.

The implementation method includes the following steps:
After the mobile phone is powered on by inserting the card for the first time and connected to the Internet (mobile cellular network or setting up WIFI), the mobile phone obtains the mobile phone number corresponding to the subscriber's card, and sends the mobile phone number and the mobile phone's unique identification data to the cloud server. The cloud server searches the sub-database that has been input with unique identification data of the mobile phone in the database by receiving unique identification data of the mobile phone. The cloud server stores the received mobile phone number associated or generates a cloud account that includes the mobile phone number as the account name in the sub-database;
The mobile phone guides a user to enter the corresponding password and/or biometric unique feature password, and stores it in the mobile phone as the mobile phone unlocking password and/or loss identification data, and uploads it to the cloud account as the login password of the cloud account;
Register the cloud account on the mobile phone and log in to the mobile phone side account simultaneously (registration and generation of the cloud account is equal to default wireless connection with the mobile phone) and the mobile phone positioning is enabled by default. Other parameter settings of the mobile phone side account can be synchronized with the relevant data parameters of the cloud account;
When the mobile phone is detected to be used abnormally or reported lost, the mobile phone executes the corresponding program and sends loss report information to the cloud account and/or when the mobile phone is used normally, the relevant information on the mobile phone is connected to the cloud account for backup.

The account name of the cloud account contains a mobile phone number. In addition to avoiding the same name as a registered cloud account, another advantage is that it increases the difficulty of illegally obtaining the account name (in the future, the value of mobile cloud accounts may be higher than that of mobile phones), needs tighter protection and should be convenient for the owner to use). The prefix or suffix letters of the account name containing the mobile phone number can be automatically generated by the cloud server according to certain rules to facilitate the memory of the owner.

The relevant information on the mobile phone is connected and backed up with the cloud account, including the cloud phone book and mobile password box (which can be displayed and edited on the mobile phone), and the data entered in the password box on the mobile phone is synchronized and backed up to the cloud account or automatically delete.

The above unique identification data of the mobile phone is sent to the cloud server. The cloud server searches the database through the received unique identification data of the mobile phone. If no sub-database consistent with the unique identification data of the mobile phone is found in the database, the cloud server generates a new sub-database that contains the unique identification data of the mobile phone, and stores the received mobile phone number associated or generates a cloud account that includes the mobile phone number as the account name in the new sub-database.

During the registration process, the unique identification data of the mobile phone may not be sent to the cloud server, but may be sent and stored after registration or sent during activation and use but not associated with the cloud account.

If a user pays attention to the privacy of mobile cloud accounts, he can also use unique identification data of the mobile phone or subscriber card, such as the electronic serial number, as the account number to register a cloud account. The method is that after the mobile phone is turned on and connected to the internet, the mobile phone sends its own electronic serial number and password to the cloud server. The cloud server generates a cloud account with the electronic serial number as the account number. However, although such a cloud account is more secure, it is more troublesome to log in on other devices (and users need to keep the electronic serial number and other unique identification data for a long time. Once lost, it will cause trouble).

The mobile phone guides the user to input the corresponding password and/or biometric unique feature password, and stores it in the mobile phone as the unlocking password and/or loss report identification data. It means that the password, whether it is alphanumeric or biometric unique feature data, can be used as the unlocking password and also as the identification data for reporting the mobile phone lost. That is, it can determine whether the mobile phone is reported lost based on the identification of alphanumeric password or biometric unique feature data.

That is to say: if the mobile phone is detected to be used abnormally, including whether the mobile phone recognizes different passwords and/or identification data and whether the input password data times out, the mobile phone will enter a different working state. More specifically: the mobile phone has the ability to use password data and usage status to identify whether it is used by the owner and report to the owner. When a mobile phone enters a state or working state that is not exactly the same, the essence is that the owner uses the mobile phone normally and strictly protects privacy and security. When it is not used or held by the owner, the public interface or menu can only be used. After being recognized by the mobile phone, without obtaining the owner's privacy, important information of criminals can be exposed. The reason why they are not exactly the same is that the main purpose is to report the loss and control of mobile phones as covertly as possible, so that they are not easily detected by criminals, and thus obtain more useful information.

The mobile phone will also enter different working states before and after it is remotely controlled by a cloud account, or the card of the mobile phone is illegally replaced, or the virtual subscriber card phone is illegally programmed, and the loss report can be performed in different working states.

The technical idea that the mobile phone does not enter the same state or working state actually divides the use of the mobile phone into legal use and illegal use, and maps the mobile phone into legal use mode and illegal use mode. Furthermore, the illegal use mode of mobile phones can be developed so that, except that the privacy and security parameters set by the owner cannot be changed or deleted, other applications of the mobile phone are treated as if they were new phones for illegal use, allowing illegal users to use more menus and more functions and in turn expose more substantial information. It is precisely on this basis that the present invention carries out corresponding segmentation and innovation on the interface, parameter setting, data identification, program execution and other dynamics of the mobile phone, and on this basis, it also innovates the existing functions of the mobile phone (the most obvious one is the mobile phone setting function) is subdivided and re-innovated to achieve a more secure protection of the owner's information, obtain as much information as possible after the mobile phone is stolen through technical means, and conduct technical control and interference with illegal users or holders, and finally form a situation where no people has a desire to possess lost mobile phones, and mobile phones will become items that people carry with them and are not afraid of losing.

In addition, the mobile phone number and password data after guided entry can be synchronized by sending to the cloud server. The cloud server stores the received mobile phone number and associates or generates a cloud account containing the mobile phone number as the account name. The password data received by the cloud server is associated with the login password for the cloud account.

The implementation steps of synchronously sending the obtained mobile phone number and the password after guided entry are as follows:
After the mobile phone is powered on by inserting the card for the first time and connected to the Internet, the mobile phone obtains the mobile phone number corresponding to the subscriber's card and is guided to enter the corresponding password and/or biometric unique feature data and store them in the mobile phone as the mobile phone unlocking password and/or loss report identification data;
The mobile phone will send the obtained mobile phone number and the password after guided entry to the cloud server. The cloud server will store the received mobile phone number and associate or generate a cloud account containing the mobile phone number as the account name. The cloud server will associate the received password data into the login password for cloud account;
Register a cloud account with the mobile phone to log in to the mobile phone side account simultaneously and enable mobile phone positioning by default;
When the mobile phone is detected to be used abnormally or reported lost, the mobile phone executes the corresponding program and sends loss report information to the cloud account and/or when the mobile phone is used normally, the relevant information on the mobile phone is connected to the cloud account for backup.

The above password is both the unlocking password and the login password for the cloud account. It solves the problem of forgetting the login password of the cloud account if it is not used frequently. In actual implementation, it is recommended to use non-biologically unique feature data passwords, such as alphanumeric mixed passwords.

With the popularization of facial recognition cameras on computers, tablets, and notebooks, and the future promotion of finger veins, fingerprint mice or keyboards, the login passwords for the above cloud accounts can be divided into first-level login passwords, second-level login passwords, etc. For example, face and fingerprint data can be used as the first-level login password for a cloud account, and alphanumeric characters can be used as the second-level login password for important subsets (categories) or important function menus in the cloud account. The important interface in the cloud account refers to categorizing the important function menus and placing them in a subset (category) or page. The cover of the page is the important interface, if the important function menu in the operation needs to be decrypted for the important subset or important interface.

In order to obtain more accurate information about illegal users, the present invention does not recommend fully locking the screen of the mobile phone. The purpose of locking the screen of the mobile phone is to lock the function menu page of the mobile phone, especially the privacy menu page. Therefore, the present invention provides a non-fully locked screen security mobile phone (a method for implementing a mobile phone with incomplete locked screen to prevent theft and report loss), which can register a cloud account and accept remote control of the cloud account. After the mobile phone receives a loss report instruction, illegal users only need to use the mobile phone, including pressing the power button, the HOME button or shaking the screen, and the operation of the mobile phone after receiving a call, and the mobile phone is manually grasped and maintained in a static position, the mobile phone being tilted horizontally to a certain angle, etc. It also includes operations such as scrolling the mobile phone screen (turning the home screen of the mobile phone, wallpaper or public interface, password input page, etc.) or clicking on the non-private function menu, and the mobile phone will automatically take invisible photos and send them to the cloud account. After the mobile phone is restarted or turned on again, if the mobile phone screen is completely locked, the opportunity for the illegal user to use the mobile phone face-to-face is reduced, and the probability of obtaining clear photos of the illegal user is also relatively low. Therefore, according to the method provided by the present invention, the mobile phone is locked by password or locked by cloud account, but the home screen is not locked at least.

If the application scheme of the public and private interfaces of the mobile phone is not implemented, it is recommended that when the mobile phone is locked by password and restarted or re-booted or controlled to be locked, the lock screen or the prompt page for inputting password or fingerprint should not be locked or displayed as part of the home screen or floating on the home screen, and the home screen can be flipped over. Alternatively, after flipping over the home screen, it can display the prompt page for inputting password or fingerprint. Furthermore, pages of the mobile phone the such as the home screen, negative one screen, wallpaper, dynamic wallpaper, news, stories, search, and quick center that do not affect mobile phone security after correction can be displayed (these pages can also add inductive menus). Similarly, for the locking of the subscriber card PIN password, it can also at least not lock the home screen or all non-private interfaces after restarting or booting up.

Furthermore, the mobile phone recognizes different passwords and/or authentication data and the time of entering the password data, and enters a state (mode) that is not exactly the same. The above-mentioned pages that can be turned are divided into two pages that are not exactly the same: after the inputted password on the mobile phone is incorrect or timed out or reported lost, in addition to the above-mentioned publicly available content, the opened page may also include the app store, WIFI settings, and/or some APP menus with no content to be logged in, etc.

The above-mentioned non-fully locked screen security mobile phones are also suitable for facial recognition and taking pictures to report lost. The specific implementation method is as follows:
For mobile phones that have registered a cloud account and logged in to the mobile phone side account and/or bound a loss report number and have entered facial data and lock screen password, after restarting or rebooting, the prompt page for inputting password or fingerprint should not be locked or displayed as part of the home screen or floating on the home screen, the pages of the mobile phone page can be flipped. When or after being flipped, the mobile phone camera enters the face scanning state;
If the scanned image data matches the entered face recognition data, the mobile phone enters the use state;
If the scanned image data does not match the entered face recognition data or the scan times out, the mobile phone will take a photo and send photo information to the cloud account and/or the loss report number, and the mobile phone screen will stay in the original state or enter other non-private use states.

The above implementation method can also be used in the same way as facial recognition to take pictures and report lost when entering the public interface of the mobile phone and using the public menu, which is called "Method for mobile phone precise face recognition and loss report by taking photo". Of course, even if the prompt page for inputting the password or fingerprint cannot be flipped, a photo is still taken with face recognition to report the loss, but the chance of getting a clear photo of the face will be reduced. However, the present invention does not limit any implementation method of facial recognition, taking photo and reporting loss.

Excluding non-biological unique data passwords, the above-mentioned quick cloud account registration requires only an alphanumeric password input for mobile phone users during the entire registration, mobile phone login, and initiating of positioning. The rest is automatically completed by the program, which greatly simplifies the registration process. At the same time, when entering the password, it is synchronized with other shared passwords, that is, the passwords that can be shared in the mobile phone and related subscriber cards, cloud accounts, etc. are generated or modified simultaneously with one input. This kind of mobile phone is forced to boot when it is first turned on, but it only needs to enter a synchronizable alphanumeric password (equivalent to a biometric unique feature password) to complete the quick settings of the cloud account registration and mobile phone login and/or turning on of the default mobile phone positioning. The mobile phone is more secure and brings a refreshing experience to mobile phone users. As for other parameter settings of the cloud account, subsequent guidance can be added.

If it is a dual physical card mobile phone and the program does not select the primary and secondary card registration, the user needs to select a mobile phone number corresponding to the subscriber card to register.

If it is a physical card plus a virtual card mobile phone, it is recommended to register a cloud account with the mobile phone number corresponding to the physical card by default.

If it is a virtual subscriber card mobile phone without a card slot, this quick registration cloud account needs to be registered after the mobile phone is turned on for the first time and the code is written. Writing codes for virtual subscriber card mobile phones without card slots includes coding by machine in the operator's business hall, over-the-air downloading by users or coding by Bluetooth transfer, etc.

Virtual subscriber card mobile phones without card slots can register cloud accounts and screen locks, and can use biometric unique feature passwords without entering alphanumeric passwords.

Since the mobile cloud account is very important for the security of the mobile phone, it is recommended that users do not log out of the mobile phone side easily. However, in some cases, users may forget to log in again after logging out. In this regard, users can use the method of logging out of the cloud account in standby mode and logging in automatically after a certain period of time, or the method of automatically logging in after the mobile phone is turned on again, including invisible power on, to ensure that the cloud account on the mobile phone is permanently online. Similarly, given that the mobile phone cloud account is very important for the security of the mobile phone, it can also be separated from the mobile phone settings function as an independent function menu and placed under the mobile phone privacy interface.

The above two implementation steps and the relatively complicated registration cloud account implementation steps including uploading more data are equivalent technical solutions in the present invention.

It should also be noted that after the above-mentioned mobile phone is turned on after inserting a card for the first time and connected to the Internet, if the mobile phone cannot obtain the subscriber card corresponding to the mobile phone number, the mobile phone can guide the owner to enter the mobile phone number. Alternatively, in view of the current situation where some mobile phone subscriber card operators do not support automatic retrieval of the corresponding mobile phone number, the implementation of the present invention can choose an equivalent method of guiding the owner to input a unique number such as their mobile phone number or email address. That is, after the above-mentioned mobile phone is turned on after inserting a card for the first time and connected to the Internet, the phone can guide the owner to input the unique number such as their mobile phone number or email address, and send the unique number to the cloud server. The cloud server will store the number after verification and generate a cloud account with the unique number as the account name.

The email address can be used as a cloud account login account or as a loss report number.

It should also be noted that when the above-mentioned mobile phone is used normally, the relevant information on the mobile phone is connected and backed up with the cloud account. It is preferable that when the mobile phone is used normally, important information on the mobile phone is synchronized with the cloud account.

When the mobile phone is used normally, the important information of the mobile phone is synchronized with the cloud account. This means that when the mobile phone is used normally, important information such as the mobile phone book, call records, timing and positioning can be optionally sent to the cloud account synchronously.

When the mobile phone is in normal use, the synchronization of important information on the mobile phone with the cloud account may also include synchronizing the photos and/or videos, fingerprints, etc. taken during key operation steps to the cloud account.

The timing and positioning refers to the real-time positioning of the mobile phone by the mobile phone at a fixed interval.

The relevant information on the mobile phone is connected to the cloud account, and different modes can also be divided in the encrypted menu to realize information connection for users of different ages and users with different needs.

Synchronizing important mobile phone information with cloud accounts not only increases the chance of recovering the lost phone, but also increases the prevention of the owner's personal safety. It can also be used for parents to care for minors, and even helps the owner recall important things.

According to the above implementation method of the present invention, it also includes the following steps of the cloud account sending instructions to the mobile phone: the mobile phone obtaining the corresponding mobile phone number, and associating or generating a mobile phone side account with the mobile phone number as the account name on the mobile phone;
After logging into the cloud account, the user can check the loss report information received by the cloud account, and can also send control instructions to the mobile account.

The cloud account involved in the present invention mainly revolves around the information signaling interoperability between the user cloud of the cloud account (i.e., the cloud account client referred to in the present invention) and the mobile phone. It is an addition to the existing technology that includes various reporting loss procedures from the mobile phone to the cloud, and the controlling program of sending of control signals from the cloud to the mobile phone to turn on the mobile phone.

To actually implement the present invention, there are many related steps that are automatically executed. It is necessary to consider the situation that the original cloud account and the newly registered cloud account have the same account name, as well as verification of anti-malicious registration, etc. The system can automatically add letters or prompts as prefix or suffix to distinguish logins passwords and/or relevant unique data uploaded by mobile phones to authenticate and/or associate, and can also use automatic verification technology for private access tokens to address the situation. All the tasks that can be automatically completed by the computer program are automatically completed by the program. The automatic pop-up information that requires users to make choices or receive special prompts is used to guide users to complete the tasks. It strives to minimize the number of steps required for users to complete tasks, as well as the number of times and amount of data that users need to input or enter, especially for essential functions.

The key to this technical solution is that it creatively proposes that after the mobile phone is turned on for the first time and the code is written or the card is legally replaced, the mobile phone number corresponding to the subscriber's card is automatically obtained after the mobile phone is turned on for the first time, and the quick guide is used to register a loss report cloud account, and the mobile phone side account is synchronously bound and logged in on the mobile phone (and important functions of the mobile phone, such as enabling of mobile phone positioning by default, and automatic resetting of the mobile phone side account after logging out), the entire process only requires entering password data and/or choosing to agree. Therefore, any other implementation steps that adopt or refer to this key technical solution are equivalent to the implementation steps of the present invention, and the technical solutions are also regarded as equivalent, such as changing the first boot to after boot use or other.

According to the above implementation method of the present invention, the unique identification data built into the mobile phone includes: the International Mobile Equipment Identity Code IMEI in the mobile phone and/or the built-in satellite navigation chip identification code, WIFI network card MAC identification code, Bluetooth address code, etc.

According to the above implementation method of the present invention, the unique identification data built into the mobile phone card includes: the International Mobile Customer Identity IMSI in the mobile phone card and/or other built-in unique identification data such as the integrated circuit card identification code ICCID, etc.

According to the above-mentioned implementation method of the present invention, the detection of abnormal use of the mobile phone (non-normal use state) includes incorrect entry or timeout of entering alphanumeric password or fingerprint facial data, illegal card replacement, etc., also includes replacement of mobile phone cards, operations during the process of removing the mobile phone card, also include operations during shutdown, restart, etc., operations during the process of being booted by the mobile phone boot program, and also include still using the mobile phone when the battery power is lower than the threshold, illegal disassembly, and even extremely intense exercise in an instant, the screen of the mobile phone being crushed or broken, etc.

According to the above implementation method of the present invention, when the mobile phone detects abnormal use, the mobile phone executes corresponding programs including: reporting loss, recording, taking photos, recording videos, emitting high alarm sounds, uploading data, etc.

According to the above implementation method of the present invention, taking photos may be automatic focusing and taking pictures by a mobile phone.

According to the above-mentioned implementation method of the present invention, the "reporting loss" refers to the state of the mobile phone entering into the lost mode with waiting to execute the loss report, invisible loss report, and/or being controlled and loss report command. It can include programs for the mobile phone to automatically initiate timed invisible power-on and/or timed power-off, initiate charging invisible automatic power-on, and incoming calls from the original phone book of the phone after being reported lost being not displayed, etc.

There are two main situations when a mobile phone enters the loss report state. One is when an automatic program is started due to incorrect password, data inconsistency, timeout, etc. The other is when the mobile phone accepts controlled information instructions to enter.

If the fully intelligent loss report function of a mobile phone is fully developed, every abnormal use of the mobile phone can automatically trigger the mobile phone to report a loss. To this extent, there is almost no need to deliberately send a loss report command. However, since the development of fully intelligent loss report takes time and special scenarios require special operations, in some cases a cloud account is required to send a loss report command to the mobile phone. For example, if the owner confirms that the mobile phone is stolen but has not yet received the loss report, in order to prevent relatives and friends in the mobile phone book from being deceived by calling the mobile phone, a loss report instruction can be sent through the cloud account to transfer all incoming calls in the mobile phone book to the emergency contact number except the emergency contact number; or start a ringing that cannot be hung up and the volume of sound cannot be adjusted to attract the attention of the illegal holder or others, and at the same time start the mobile phone to take pictures to report the loss. For another example, after the owner confirms that the mobile phone is stolen, he can send a loss report instruction through the cloud account, enable the display of induced text messages for a specific number, enable invisible charging power-on, etc. The loss report command can be a collection of multiple information commands, which can be initiated remotely through a cloud account with one click (it can also be operated separately through multiple menus).

Wherein, the mobile phone is reported lost after the cloud account sends a loss report instruction with one click, and the mobile phone side account receives the loss report instruction sent by the cloud account. The mobile phone enters the hidden loss report state. As long as the mobile phone is detected to be used, it invisibly and automatically takes photos at intervals and sends the loss report information containing photos to the cloud account invisibly.

The above-mentioned technical solution for automatically taking photos to report the loss after the mobile phone is reported lost can be implemented independently, that is, based on the existing cloud account mobile phone, a program for taking photos and reporting the loss after being reported lost is developed and built into the mobile phone, and a lost mobile phone function menu is added to the cloud account.

If the mobile phone is reported lost, it will automatically take photos to report the loss, and the mobile phone will be abnormally used to automatically trigger the loss report by taking photos or other loss report programs. If enabled at the same time, there may be an execution conflict. After the mobile phone is reported lost by the cloud account, it can no longer execute the steps of comparing face, fingerprint, and digital password, but replace them with steps such as flipping pages, clicking, etc., or taking photos more quickly and densely at regular intervals to report the loss. In addition, after the mobile phone is reported lost by the cloud account, the privacy interface is forced to be hidden without any entrances, or it will not be displayed even if the password is correct, unless the lost report is canceled through the cloud account (it is recommended to input the secondary decryption password for canceling the loss report).

According to the above-mentioned implementation method of the present invention, the scheduled invisible power-on of the mobile phone is that after the mobile phone is shut down due to abnormal use, when the built-in clock reaches the set time, the mobile phone automatically turns on without the screen being displayed and making no sound, and sends loss report information, accepts being controlled. Of course, if the scheduled invisible power-on of the mobile phone is changed to a scheduled power-on during implementation, this is a deliberate deterioration in the present invention and also falls within the protection scope of the present invention. The prerequisite for the scheduled invisible power-on of a mobile phone is not only delayed shutdown (shutdown due to abnormal use), but also shutdown when the power supply falls below the threshold.

According to the above implementation method of the present invention, the lost information sent by the mobile phone to the cloud account includes: location information, illegally used mobile phone numbers, WeChat, SMS, Changlian, MiLiao, QQ and other information, and also includes illegally used information. Biometric information such as fingerprints, photos, voice, iris, and breath of the user can also be further included in the corresponding programs executed by the mobile phone, as well as battery information of the mobile phone, videos taken, etc.

According to the above implementation method of the present invention, when the mobile phone detects abnormal use, the mobile phone sends loss report information to the cloud server, which may further include sending loss report information to a loss report number or the like.

According to the implementation method of the present invention, when the mobile phone is invisibly automatically powered on and reported as lost, it can synchronize or subsequently automatically initiate a shared real-time location request. The sharing request can be sent to a cloud account, or to a loss report number or a set WeChat relative and friend.

According to the above implementation method of the present invention, when the mobile phone detects abnormal use, the technical solution for the mobile phone to send loss report information can be split into multiple sets of independent technical solutions for passive and intelligent mobile phone loss report according to different usage situations.

The technical principle or abbreviation of this technical solution can be summarized as a mobile phone cloud account that can be quickly registered and reported lost. The advantage is that the mobile phone owner only needs to enter the corresponding password and/or biometric unique feature password once to complete registration of the mobile cloud account and log in to the mobile phone side account and mobile phone unlock password settings.

According to the above implementation method of the present invention, the cloud server is a cloud system that has created a cloud database and related operating programs. The cloud database can include various unique identification data built into the mobile phone that have been entered before the mobile phone leaves the factory, the relevant running programs include various subprograms for processing, such as receiving, correlating, saving and sending mobile phone data. The subprograms for processing mobile phone data include various control and remote synchronization control of the mobile phone, as well as one-click loss report and one-click networking alarm, etc.

The one-click networking alarm is to establish network communication between the mobile phone cloud account and the public security, which can send the illegal user's information and/or the owner's report or request for help information to the public security network at one time after the mobile phone is stolen (Cooperation from the police is required). After the cloud account calls the police with one click, the system opens the listening and monitoring menu, and the legal owner further chooses to listen and monitor the stolen mobile phone.

This cloud server management system can be divided into a variety of innovative technical solutions. Various unique identification data built into the mobile phone are entered before the mobile phone leaves the factory. Not only can it be tracked to be illegally used without being sold to consumers, but also is possible to find the whereabouts of key parts after they are illegally used after the mobile phone is dismantled into parts and then assembled.

In addition, the management system of this set of cloud servers uses biometric technology to log in to cloud accounts, which not only prevents unexpected and illegal logins caused by forgotten passwords and leaked verification codes in existing login methods, but also makes logging in more convenient, faster and safer.

According to the above implementation method of the present invention, the cloud account synchronously stores various important data generated by the mobile phone, and can further process these data.

According to the above implementation method of the present invention, the mobile phone guides the entry of corresponding passwords and/or biologically unique passwords, which may also include guidance of entry of security questions, email addresses, etc., and may also include the steps of uploading the necessary data among these data to the cloud server and/or the steps associated with the mobile account (in addition to the entry of necessary password data during registration, other data can be entered after the registration and login are completed).

In summary, the present invention provides a multi-level management cloud account system that can remotely control mobile phones, which is a technical upgrade and functional supplement to the existing cloud account system. The cloud account system includes a mobile phone manufacturer (backend) and a mobile phone client (client or front-end) multi-level management login interface and corresponding multi-task menus and/or multi-level pages. The client interface where the owner logs in includes menus for remote control of the mobile phone and/or corresponding guided control steps.

Furthermore, a cloud phone-like mobile phone interface is used to operate the phone in real time on the cloud account client (mobile phone screen mirroring collaborative sharing).

The mobile phone interface similar to the cloud mobile phone operates the mobile phone in real time. One of its important purposes is to realize location sharing similar to that in WeChat and achieve accurate search for the lost mobile phone.

In addition, the collaborative sharing of mobile phone screen mirroring can maximize the acquisition of information that has been illegally used or held after the mobile phone is stolen. It can also retrieve the important information of the owner that has not been backed up or delete the application data in the mobile phone after retrieving important information.

The cloud account may be used to control auxiliary repairs of the mobile phone such as unlocking the screen, decryption, turning it on and off when some malfunctions occur on the mobile phone, such as when the screen is damaged. In view of the importance of mobile phone screen mirroring collaborative sharing to mobile phone security, it is recommended to encrypt it twice.

The corresponding guidance and control steps may include guiding to modify the scheduled power-on time of the mobile phone, guiding to send a phrase urging return, and so on.

According to the implementation method of the present invention, software such as WeChat or QQ can also be remotely controlled to obtain the information of the nearest person or invite to add the nearest person (or people around you, it should be technically possible but there are legal obstacles).

Airdrop and receiving airdrop can also be remotely set up to obtain more information about the illegal holder or send information to the surrounding area.

The lost mobile phone can also be remotely controlled to open applications such as low-power one-touch transfer, one-touch adding friends or near-field digital currency payment, so as to obtain relevant information about mobile terminals within the effective range, such as using the payment of low-profit red envelope guidance (sending WeChat or Alipay small payment code to the home screen of the lost phone).

In addition to remote control of mobile phones with cloud accounts, the cloud account contains instructions for controlling the mobile phone after it is stolen and the corresponding push information template. It can send templates or customized information to the mobile phone screen, push small payment codes, and develop the cloud account one-way video phone (one-way smooth connection), as well as invisible photo taking or video recording during one-way smooth connection, and can also develop applications such as direct one-way calling and mobile phone intercommunication.

The multi-level management login interface may include a mobile phone manufacturer-side login interface that is not user-oriented. After logging in, it is limited to querying relevant information that does not infringe the user's privacy; the multi-level management login interface also includes the content interface for verification login by the owner and/or the owner's relatives. The owner's login interface includes a menu for remote control of the mobile phone and/or corresponding guiding operation steps.

The content interface for verification login by relatives and friends of the mobile phone owner (limited to the owner of the bound emergency contact phone) enables non-owners to query the movement trajectory of the missing phone.

That is, the cloud account can use multiple emergency contact mobile phones in the stored cloud account to jointly request verification login. It is recommended that at least two emergency contact mobile phones, and preferably three to six, jointly verify the login, or design login permissions based on the number of verification phones. For example, verification of three mobile phones is equivalent to the first-level login password, and verification of six mobile phone verification is equivalent to the second-level login password.

Specifically, in the login page of the cloud account client, optional co-verification login is available. After inputting the several emergency contact mobile phone numbers stored in the cloud account, click to send SMS verification code. The corresponding mobile phones receive the verification code sent by the cloud server and input it one by one to enter the content page of the cloud account.

The cloud account also includes operation suggestions and corresponding information push after the mobile phone is stolen; the mobile phone cloud account client includes a function menu for sending the loss report command to the mobile phone account; the mobile phone cloud account client includes a one-click networking alarm function; the cloud account has the function of one-way initiating calls and/or mobile phone intercommunications; the cloud account can activate mobile phone listening, monitoring, one-way smooth connection function and so on when the conditions are met.

The technical principle or abbreviation of this technical solution can be summarized as a multi-level management cloud account system that can remotely control mobile phones. The advantage is that the cloud account is not only a cloud bodyguard for mobile phones, but also a control tool for lost or stolen mobile phones.

It should be noted that the above technical solutions corresponding to the claims and the following embodiments and the starting point of the claims highlight the security of mobile phones, but the actual technical principles can also realize the simpler requirement of quickly registering a cloud account with a mobile phone. In actual implementation, quick cloud account registration can be implemented first and then steps related to mobile phone security can be carried out. That is, the implementation of the above technical solution can be modified into a technical solution with a wider scope of protection than the claims. In addition, the above technical solutions corresponding to the claims are in a mutually reinforcing relationship. In order to realize the quick registration of cloud accounts on mobile phones and achieve more secure mobile phones, the cloud server may implement corresponding technical solutions to match.

Similarly, each of the above-mentioned multi-way control of mobile phones by cloud accounts can be an independent technical solution, which can be implemented individually or in combination. It can also be implemented after regular (non-synchronized and quick) cloud account registration. The relevant implementation steps are not enumerated one by one, but they are all within the scope of the protection of this invention, like the mobile phone being reported lost by the cloud account.

In addition, the above-mentioned mobile phones can recognize different passwords and/or identification data and enter password data at different times, enter different working states, start at a scheduled time, charge and start, etc., which can also be independent technical solutions, which can be implemented individually or combined. The implementation can also be implemented after regular (non-synchronous and quick) cloud account registration, which all fall within the protection scope of the present invention.

The above implementation method is to use the technical solution of quickly registering a lost report cloud account to realize the secret loss report and anti-theft of mobile phones. The cloud account based on RCS based Super Trust has the same effect. Alternatively, a method of realizing the auxiliary secret loss report and anti-theft by quickly binding mobile phone numbers can also be used. This implementation method includes the following steps:
After the mobile phone is powered on by inserting the card for the first time and connected to the Internet, the built-in processing program of the mobile phone will automatically bind the unique identification data built into the mobile phone card, and bind the corresponding mobile phone number obtained by the mobile phone and/or guide the entry of the loss report number and bind it;
When the mobile phone detects that it is being used abnormally, the mobile phone will send a loss report message and/or call the bound number;
The automatically bound mobile phone card has built-in unique identification data and the bound mobile phone number and/or loss report number, which can be unbound or modified by unlocking the screen or removing the encrypted menu.

It should be noted that if the operator supports the mobile phone to obtain the mobile phone numbers corresponding to all subscriber cards and the technical solution of illegally replacing the card and reporting the loss using the subscriber card PIN password by the mobile phone, automatic binding of the above-mentioned mobile phone built-in processing program and the built-in unique identification data of the mobile phone card can be omitted. In other words, the current determination of illegal card replacement of mobile phones includes whether the mobile phone illegally changes the card now includes whether the mobile phone number corresponding to the subscriber card obtained by the mobile phone is consistent with the mobile phone number corresponding to the subscriber card stored in the mobile phone, whether the subscriber card PIN password is consistent with the subscriber card PIN password stored in the mobile phone, and whether the unique data built-in in the subscriber card is consistent with the unique data built-in in the subscriber card stored in the mobile phone. The first judgment also applies to virtual subscriber card mobile phones, corresponding to automatic reporting loss of illegal number replacement.

According to this fast binding loss-reporting and anti-theft implementation method, the mobile phone sends loss report information, which may include various remote control operation command sets and loss report information for the local machine, and may also include sending loss report information to a cloud account.

According to the implementation method of fast binding loss report and anti-theft, the guided entry of the loss report number is to guide the entry of other mobile phone numbers of the owner or the emergency contact called mobile phone numbers of the owner's relatives and friends. At the same time, just like the synchronized password input when quickly registering a cloud account, when quickly binding a loss report number, it is synchronized with other shared passwords, and the synchronized number only needs to be entered once.

According to the implementation method of this rapid binding and anti-theft reporting loss, the mobile phone detects that it is being used abnormally, including the unique identification data built-in in the mobile card detected by the mobile phone being inconsistent with the unique identification data built-in in the mobile card that has been bound, or the mobile phone number obtained being inconsistent with the mobile phone number that has been bound. It also includes more technical solutions of abnormal use, including: password data that is entered into the mobile phone being inconsistent with the password data entered into the mobile phone, the mobile phone failing to enter the password data after timeout, the mobile phone attempting to shut down illegally, the card of the mobile phone being illegally replaced, the mobile phone be attempted to be illegally flashed, the mobile phone being attempted to be illegally disassembled, the mobile phone being illegally answered, all application after the mobile phone is reported lost.

This method of quickly binding a mobile phone to report loss and prevent theft actually includes at least two sets of technical solutions. One is for the mobile phone to fully automatically bind the loss report number (local number), and the other is for the mobile phone to quickly guide the binding of the loss report number (the number of a relative or friend). For dual-SIM or dual-number mobile phones, the bound number in fully automatic binding of local numbers and the number registered in the cloud account should be kept separate as much as possible. It is recommended not to use the same number.

The above two implementation methods of quick registration and quick binding of mobile phone loss-reporting and theft prevention can be applied separately, or can be applied simultaneously in one mobile phone, one main and one auxiliary. Simultaneous application will greatly increase the probability of mobile phone loss report and theft prevention, and it is also possible to further synchronize the settings with pre-alarm numbers.

This quick binding technical solution is not only simple and convenient to set up, but more importantly, the dialing loss report provides a prerequisite for consuming illegal users' phone bills. After several legal owner's answering actions, the illegal user will inevitably regret not having been an honest finder who returns lost property.

In view of the fact that this technical solution needs to bind the mobile phone subscriber card and the loss report number, it needs to be unbound for legal card replacement of the mobile phone. And since the screen locking of smartphones has long become a must-have function, the menu for unbinding mobile phone subscriber cards and loss report numbers can be designed under the lock screen encryption interface.

In addition, since the legal replacement of mobile phone cards is not only related to the quick binding of the loss report number of the mobile phone, but also to other functions such as the quick registration of cloud accounts on the mobile phone, and can share the same solution, therefore, in the present invention, cancellation of registration and legal replacement of the bound mobile phone is another technical solution.

The technical principle or abbreviation of this technical solution can be summarized as fast binding of emergency loss report mobile phones.

An important purpose of fully automatic binding of local numbers is the protracted battle between legal phone owners after they refill their cards and illegal mobile phone appropriators. In order to avoid disturbing relatives and friends too much, the calling loss report for illegal card replacement of the mobile phone is automatically set to the owner's own number, which is more conducive to consumption of the mobile phone charges incurred by the illegal trespasser who illegally changes the card and uses the stolen mobile phone. Of course, remote screen collaborative sharing can also be implemented using cloud accounts, but the technical implementation is relatively difficult.

Although calling the owner of a stolen mobile phone after illegally changing the card can consume the illegal user's phone bill, if the number of calls is large, it will also harass the owner. To this end, the present invention also provides a technical solution for avoiding harassment by using a mobile phone to consume the other party's phone bill. The following is a method that can greatly reduce harassment calls, that is, adding a function option "answer without sending call" on the incoming call interface of the mobile phone, after selecting this function, the mobile phone will answer the incoming call but turn off the microphone and/or speaker.

Furthermore, an automatic connect blacklist is added to the mobile phone address book. Incoming calls added to the blacklist can be automatically connected, but the call will not be sent and/or the sound will not be raised.

The present invention also provides a method for implementing "secretary answering" do not disturb incoming calls, that is, adding a "secretary answering" function option to the incoming call interface of the mobile phone. After the owner selects this function, the mobile phone will answer the incoming (unfamiliar) call by the voice robot talking to the caller and converting relevant important voice information into text, making it easier for the mobile phone owner to read and determine whether to answer the next call or add it to the blacklist. In addition, the voice robot may have the logical ability to judge malicious calls and automatically add malicious calls to the automatic connection blacklist.

Furthermore, after the user selects the "secretary answering" option, the mobile phone displays a variety of voice conversation scenarios for the user to choose from, for example: during a meeting, while driving, during lunch break, etc.

Or furthermore, when the "secretary answering" and/or "answering without sending call" work, other operations of the mobile phone other than calls will not be affected.

Compared with the current anti-harassment call technology of mobile phones, the "secretary answering" and/or "answering without sending call" of the present invention are more intelligent. It can not only filter out harassment calls, but also ensure that important calls are not missed.

According to the above technical solution and the idea of realizing covert loss report and theft prevention of mobile phones, the present invention provides a variety of covert loss report and anti-theft mobile phones. Its innovative technical solution is that after a mobile phone with a registered cloud account and/or a bound loss report number is detected to be used abnormally, the mobile phone will enter the corresponding covert loss report state based on different abnormal operations;
The above-mentioned covert loss report may include invisible standby after timing or charging invisible power-on reporting loss, automatic loss report due to continuous fingerprint unlocking error, and/or other loss reports caused by abnormal use of the mobile phone, etc.

The described invisible power-on by charging of the mobile phone (equivalent to scheduled invisible power-on) is that after the mobile phone is shut down due to abnormal use or the power supply being lower than the threshold, the mobile phone charging management system detects the charging current and starts the mobile phone to turn on the mobile phone without displaying the screen and making no sound. Alternatively, as long as the mobile phone is turned off when charging, the mobile phone will automatically turn on invisibly, or further restricted to as long as it is turned off when charging, the mobile phone will automatically turn on invisibly and can only be controlled by the cloud account and/or report loss to the cloud account.

Furthermore, after the mobile phone is charged and turned on invisibly, the mobile phone automatically turns on motion detection. When it detects movement or sound, the mobile phone will immediately record audio and video and send it to the cloud account. In order to prevent listening and monitoring of the mobile phone from being used maliciously and illegally, strict preconditions can be set for the mobile phone to automatically turn on motion detection. Furthermore, the cloud account automatically deletes audio and video data that has been saved beyond the expiration date in a circular manner.

It should be noted that the above-mentioned listening and monitoring of mobile phones is not limited to motion detection after the mobile phone is charged and turned on invisibly. However, just because of power endurance, it is preferable to charge the mobile phone and turn it on invisibly, without motion detection, the listening and monitoring of stolen mobile phones can also be started.

For the mobile phone being used abnormally, it mainly refers to the situation where the data password input by the mobile phone during use is inconsistent with the stored data password or the input is timed out. For example, if the mobile phone's fingerprint recognition sensor detects that the input fingerprint is inconsistent with the stored fingerprint or the input is timed out, the mobile phone will invisibly report the loss (where "invisibly" means sending in secret); further, the mobile phone will display a public interface, or enter a privacy interface without data or a download interface. Other digital passwords, including face data unlocking, are equivalent to this.

The above-mentioned loss report mobile phone is the mobile phone with other numbers of the owner or the emergency contact called number of the owner's relatives and friends.

To achieve the covertly loss-reporting anti-theft function of the mobile phone of the present invention, in addition to adding relevant menus to the cloud account, the mobile phone also builds in corresponding programs. When the mobile phone receives instructions from the cloud account, it starts the controlled program. The controlled actions that the mobile phone accepts, such as screen mirroring collaborative sharing with the cloud account, pushing messages, self-activating location sharing, remote control settings, listening and monitoring, and reporting loss, are bombs for illegal persons. These actions can greatly subvert their illegal intentions, making them afraid to easily occupy the mobile phone or have ideas of improper possession of the mobile phone. Not only the cloud account can control the mobile phone, but also the emergency contact mobile phone (preferably another mobile phone of the owner) can also control it. However, it requires similar application development, and different brand mobile phones need to download applications (if the cloud accounts of different brand new mobile phones follow the same standard protocol in the future, they can be interconnected without downloading). This type of APP application can be similar to the remote monitoring of children's watches, and add prerequisites for activating the remote monitoring of the emergency contact mobile phone (if it is ensured that the owner of the monitoring mobile phone and the monitored mobile phone are close relatives, or the two mobile phones are the same owner, the prerequisites cannot be added, but there is a possibility of illegal use). For example, if the mobile phone is illegally changed cards, illegally written codes, continuously illegally used, or illegally held for a certain period of time, the mobile phone enters the loss report (stolen) state, etc. This type of APP is downloaded by the emergency contact mobile phone and then scans QR code of the monitored mobile phone for binding (if the mobile phone is factory-installed, no download is required, but binding needs to be verified). This type of APP can be designed to bind mutual monitoring and loss report between mobile phones. This type of APP can also be developed and added with corresponding functions based on certain social APPs.

However, it should be noted that in order to report the loss of a mobile phone, whether it is a false shutdown loss report or a scheduled invisible power-on loss report, it can be deliberately changed to a visible loss report. The present invention particularly emphasizes that all technical features that are deliberately inferior to the technical solutions applied for herein are equivalent technical features and should fall within the protection scope of the present invention.

This secret loss-reporting and theft prevention technical solution can be divided into multiple sets of implementation methods for mobile phone secret loss report and theft prevention according to different abnormal operation situations. Multiple sets of implementation methods are then synthesized, refined, and optimized to further obtain a fully intelligent implementation scheme.

According to the above implementation method, or further, the loss-reporting and anti-theft mobile phone also includes a voice intelligent harassment-free module with a "connect without sending call" option (non-loss-reporting and anti-theft mobile phones can also be implemented).

The present invention not only considers the safety of the phone owner, but also considers the information security of the phone owner's relatives and friends. Once a mobile phone is stolen or lost, there is usually no time to notify all contacts in the mobile phone book. Even though the owner can use his cloud account to remotely control his phone to send text messages to everyone in his phone book, it may be a little confusing for friends he doesn't often contact. In view of this, adding an incoming call program to the mobile phone's intelligent loss reporting operating system can protect the incoming calls in the mobile phone book from being deceived or misunderstood after reporting the loss. In addition to the emergency contact number that can be connected, the incoming call program adopts a technical solution that except that emergency contact calls can be connected, other incoming calls in the phone book is transferred to the emergency contact number or the system respond with "The phone is turned off and cannot be connected", and there is no incoming call display.

In the final stage of information attack and defence, the gentle strategy of information influence can be adopted. To this end, the present invention provides a design process for the cloud account to push warning information to the mobile phone using the "diplomacy before violence" method. The specific process is: after the cloud account receives the illegal user's mobile phone number, photo, location and other information, the cloud account displays a page editing warning information, legal users select or fill in relevant information according to prompts or guidance, and then push it to the stolen or lost mobile phone desktop in sequence.

According to the design process of the present invention, the cloud account pushes warning information to the mobile phone in a "diplomacy before violence" manner, which means that no control instructions such as interfering with illegal users or locking are sent when the information is pushed for the first time;
According to the design process of the present invention, the information which is pushed sequentially to the stolen or lost mobile phone desktop, can be edited at one time and sent regularly to the cloud account.

In the same way, the automatic pop-up of warning messages on mobile phones can also adopt the design process of "diplomacy before violence".

Furthermore, the AI intercommunication is activated automatically by the mobile phone or remotely by the cloud account to persuade illegal users to return the lost mobile phone.

In addition to the information push in a "diplomacy before violence" manner, depending on the actual situation, the information that the mobile phones reply to the information pushed by the cloud account can be chosen. This type of information can be inductive information, and the information is presented in the form of text messages. The content of similar text messages can be information such as repayment, inducing illegal user and holder's reply to bank card number, Alipay account, WeChat account, etc. At the same time, information pushing also creates opportunities for clearly taking photos of faces to report loss.

Since the present invention is a series of technical solutions, in addition to the above main contents of the present invention: the mobile phone is remotely controlled by the cloud account after being stolen, the mobile phone is reported lost by the cloud account, location sharing is automatically enabled, the mobile phone quickly registers the cloud account, quickly binds the loss report number, and the mobile phone is invisibly and automatically powered on, the push of warning information by cloud accounts and the intelligent avoidance of harassment by mobile phones, the present invention can also provide a variety of combined technical solutions.

For example: a dual-card anti-theft and loss-reporting mobile phone that can simultaneously change the password of the subscriber card and quickly register a loss report account. The feature is that the dual-card anti-theft and loss-reporting mobile phone has a built-in eSIM card and has a program that can simultaneously change the password of the physical subscriber card and quickly register a loss report account.

According to the above-mentioned anti-theft and loss report mobile phone, the program that can simultaneously change the password of the physical subscriber card and quickly register a loss report account runs the following steps:
After inserting the physical subscriber card into the card slot and turning on the mobile phone, the mobile phone locks the PIN code of the subscriber card and guides the user to change the password;
The mobile phone obtains the mobile phone number corresponding to the physical subscriber card and bound it to the loss report number. In order to find the mobile phone to be stolen or lost, the user can be guided to enter another mobile phone number as the loss report number;
The mobile phone registers the number as a cloud account, and the modified PIN password is both the lock screen password and the login password of the cloud account;
the mobile phone guides the user to enter the lock screen fingerprint and sends the fingerprint password to the cloud account. This fingerprint is also the login fingerprint of the cloud account.

Based on the above description, it can be seen that after turning on the mobile phone, the user only need to input and enter the password, and the basic security settings of the mobile phone can be completed.

If the mobile phone user also has a watch mobile phone that can be paired with the mobile phone, another mobile phone number optionally guided to enter can also set the watch mobile phone number as the loss report number.

There are so many actual subsequent steps to report loss and being controlled that it is difficult to list them all. However, since the invention ideas of these combined technical solutions are basically consistent with the above, no examples are given here. For subsequent loss reporting steps, reference can be made to various hypothetical loss reporting steps in the embodiments of the present invention.

According to the above-mentioned dual-card anti-theft and loss-reporting mobile phone, the subsequent operation of the program that can simultaneously change the password of the physical subscriber card and quickly register a loss report account is the steps for reporting the loss of the mobile phone under various abnormal usage conditions and/or specific normal usage conditions and/or being controlled.

It should be noted that although the present invention does not describe all combined technical solutions (including combinations with existing technologies, such as the combined implementation of the mobile phone being controlled in multiple ways after scheduled automatic invisible startup and asynchronous quick registration of cloud accounts) one by one, and does not write all the claims one by one does, which does not mean that the present invention limits or waives the legal protection of these combined technical solutions. On the contrary, any products, systems, etc. implemented based on the technical ideas of the present invention and related inventions are within the scope of protection required by the present invention. For example, the technical solutions in this invention can be used in pure virtual subscriber card mobile phones for scheduled automatic booting, charging and invisible booting, multi-mode control by cloud accounts, self-start sharing, emergency contact mobile phone verification to log in to cloud accounts, and so on (the registration of pure virtual subscriber card mobile phone related cloud accounts can be done after the mobile phone is transferred or scanned with QR code to write code or uses other coding methods. Before writing code, setting of WIFI or starting of Bluetooth should be first done. The technical solution of registering cloud account is equivalent to that of physical subscriber card mobile phones).

It should be emphasized that the content of the present invention is an overview of the method of the present invention. Many technical features in this technical solution are actually technical solutions that can be implemented individually or in combination, and the present invention does not limit the implementation of other innovative technical solutions provided by the inventor that are not listed in this technical solution.

It should also be noted that in addition to using an account and password to quickly register a cloud account, the present invention also provides a more forward-looking implementation method for quickly registering a cloud account without an account. From the perspective of the security of mobile phones and users, the main function of cloud accounts is to store user information and protect the security of user information and mobile phones. In view of this, private bodyguard should be the main function of the cloud account, and other functions (social networking, shopping, etc.) do not need to be considered too much. On this basis, a new cloud account can be developed or the private bodyguard application of the cloud account can be independent.

This quick and easy cloud account registration without an account is implemented as follows:
After the mobile phone turns on and connect the cellular network or complete the WIFI settings, the user is guided to enter the biological biometric unique feature data (dual fingerprints or finger veins), which is stored in the mobile phone and sent to the cloud server. The cloud server stores and automatically generates the cloud account of a unique string address that is mapped to the biological biometric unique feature data. The cloud account is wirelessly connected to the mobile phone. The user searches for the cloud service login page of the brand mobile phone on other devices and enters the biometric unique feature data (dual fingerprints or finger veins) to complete the login.

The above-mentioned cloud account without an account actually uses the uniqueness of the biological biometric unique feature data. This unique data is equivalent to both the account number and the password of the cloud account. It needs to be further explained that the premise of this implementation method may be the uniqueness of the biological biometric unique feature data. It is not recommended to use non-high-definition face data due to the factor of twins. Although the finger vein data is unique, it will take time to popularize the input equipment. Therefore, dual fingerprint data or the combination of single fingerprint and mobile phone power-on password data can be tried prospectively.

### Beneficial effects:

The probability of recovering a stolen mobile phone is greatly increased, which can almost completely eliminate the idea of illegal users continuing to use a lost or stolen mobile phone;
The legal owner can operate the mobile phone more conveniently and quickly, and the settings of important functions of the mobile phone are not missed;
On the basis of improving the probability of reporting loss and preventing theft, the legal personal information and applications in the mobile phone are more secure and private;
Use unique biological data and passwords to identify the owner of the mobile phone and identify whether the mobile phone is being used legally or illegally, indirectly promoting the wider popularization of biometric technology and encryption technology;
It overcomes the shortcomings and misunderstandings of the existing mobile phone loss report and theft prevention technology, saves users time in registering or setting up related functions, and does not cause misoperation;
Not only can smart loss-reporting of the phone provide more information about illegal holder and users, but the control of the mobile phone to prevent theft may also make thieves go for wool and come home shorn (charges), making illegal persons who seek to occupy mobile phones illegally hesitant and retreat in face of difficulties;
Upgrade mobile phone cloud account technology to allow owners to remotely control stolen phones in multiple ways, forcing illegal users or holder to return their phones;
Through a seemingly crude implementation scheme, harassing calls can be significantly reduced, restore a quiet world to mobile phone users, improve the intelligence level of mobile communication terminals, and trigger the large-scale application of many innovative mobile phone technologies;
Bringing a number of innovative ideas to the research and development of mobile phones whose functions have already been integrated. Under the inspiration of this invention and related inventions, many new functions of mobile phones that are loved by consumers can be developed, which can increase the sales points of mobile phone manufacturers, enhance brand reputation and increase market share;
It has significant social significance. Over time, it can achieve a world without thieves in the mobile phone field and no fear of loss.

The present invention and related inventions overcome the technical bias in the field of anti-theft of mobile phones for many years. It replaces locking the stolen phone to prevent illegal use with allowing as much use of the phone by illegal users as possible under the premise of ensuring that the legal owner's privacy is protected. During their use, the phone is controlled to obtain sufficient information about the illegal users and to force them to return the phone. The present invention and related inventions use technical means to gradually transform locking the stolen phone to prevent use into making illegal users afraid to use the stolen phone. The illegal use of a stolen phone is not worth the cost, and this will become common knowledge for everyone. As a result, people will no longer be afraid of their phones being stolen or lost.

In addition, the more important technical effect of implementing the present invention is: not only can the mobile phone be used illegally to obtain various information of illegal users and illegal holders, but also can cause illegal users to suffer mental burden, traffic consumption, etc. Once widely implemented, the dream of a world without thieves in the mobile phone field will come true soon and be realized at an accelerated pace, and no one will pick up the mobile phone even if it is dropped on the road. In addition, if the present invention can be widely implemented, commercial malicious phone harassment will also be greatly reduced.

### Detailed description

The present invention and related inventions have many technical ideas, but the purpose of the present invention is clear. In order to make the advantages and technical solutions of the present invention clearer, the present invention will be further described in detail below in combination with various application scenarios. It should be understood that the specific implementation modes and examples described here are only used to explain the present invention and are not used to limit the present invention. The specific implementation of the present invention is diversified, and the development of related technical fields only needs to be inspired by the present invention, it is not necessary to refer to the examples.

It should also be stated that the present invention is a cutting-edge technical concept and a series of new technical solutions that revolve around mobile phones and cloud accounts. It is not a single technical solution, because it is generally consistent and closely related to achieve the overall purpose of the present invention.

### Embodiment 1:

Mobile phone registration anti-theft technology originated in 2005, but its large-scale practical application was only six or seven years later with the rapid popularization of mobile phone cloud accounts. An important function related to mobile phone security is the positioning of mobile phones by cloud accounts. Although multiple positioning, AI-assisted 3D stereo positioning, Bluetooth AOA high-precision positioning, etc. have made rapid progress since then, the security technology related to mobile phones and mobile cloud accounts has developed slowly. Until now, the only thing that involves the security of mobile cloud accounts is the remote control of mobile phones to produce high alarm sounds and remote lock screen. Even if these technologies can find the precise location of a stolen phone at a certain time, once the stolen phone is moved, the possibility of recovering it is very slim.

In fact, the technical concept of mobile phone cloud account comes from mobile phone registration and anti-theft. In this case, mobile phone cloud account can completely implement more functions that are beneficial to mobile phone security protection. The technical ideas of the following embodiments are actually not too complicated, and after actual implementation, they will bring unprecedented improvements to mobile phone security.

The implementer of this embodiment is a mobile phone brand manufacturer and needs to perform technical upgrades on the existing mobile phone cloud account system. Specifically, multiple remote control function menus and/or usage instructions may be added to the cloud account client, and the menus contain corresponding control signal. In addition, corresponding controlled programs are also added to the mobile phone side account.

For cloud accounts and mobile phones that have completed the above technical upgrades, users may first insert a card or write a code to activate them after purchase, register a cloud account during or after activation, and log in to the cloud account at the mobile phone side (mobile phone side account). Once the mobile phone is accidentally lost, after confirming that the mobile phone is stolen, the owner may log in to the cloud account on a computer device or other mobile phones. Based on the information and system suggestions obtained from the cloud account about the stolen phone, in the standby state of the mobile phone, the owner operates the cloud account in real time and clicks the relevant menu to send a control signal to the stolen phone, (if real-time is not considered, it does not have to be in the standby state);
The stolen mobile phone receives the control signal and executes the corresponding remote control program for the mobile phone;
In this embodiment, the remote control program for the mobile phone includes at least one or a combination of programs such as the phone being reported lost, automatically enabling location sharing, being remotely set up, being pushed information, being collaboratively shared with cloud account screen mirroring, being called and/or intercommunicated, being listened, monitored, remotely photographed, and one-way smooth connection.

In view of the diversity of remote control of stolen mobile phones using cloud accounts, such as remote control of self-destruction, the present invention does not limit the above-mentioned remote control programs for mobile phones.

This embodiment can be simple at first and then complex, and it is recommended to implement it step by step in actual development. Relatively complex actual development requires considering various scenarios after the mobile phone is stolen based on the various loss report programs that have been developed for the mobile phone, whether it is stolen or lost, and confirming factors such as whether the cloud account received the loss report information at the time of the theft, especially the illegal holder or user's photo, or other more valuable information, based on this, mobile phone security instructions may be added in the cloud account and control suggestions are given in different scenarios. For example, the control after obtaining the illegal user's photo and location can be different from the control after obtaining the illegal user's mobile phone number or other accounts. The control between obtaining information after the mobile phone is stolen and obtaining information after the mobile phone is lost can also be different.

According to this embodiment, the control signal includes signal instructions and push information. The signal instructions include single instructions and concurrent instructions. The push information includes text, pictures, voice and video information.

According to this embodiment, when the mobile phone is reported lost, it includes that after the mobile phone side account receives the loss report instruction sent by the cloud account, the mobile phone enters the loss report state. When the mobile phone detects that it is used facing the screen, it automatically takes a picture and sends the loss report information to the cloud account.

Furthermore, the mobile phone was reported lost by the cloud account before the card was illegally replaced. The mobile phone executed a passive loss report mode, which was equivalent to the mobile phone running different system program from the legal user. This system program cannot enter the system where the owner has locked the screen, but is a new system similar to a system application clone specially designed for illegal use: except that it cannot dial and send any phone numbers other than the emergency contact numbers already in the public interface, and send a number dialed to the cloud account and/or a loss report number, there are almost no restrictions on other functions of the mobile phone (even including new Alipay, new WeChat registration and login, etc.), but important information obtained by using the mobile phone is backed up to a cloud account or can be viewed remotely by cloud accounts.

Furthermore, after the mobile phone is illegally replaced with a card or the virtual subscriber card is illegally coded, the mobile phone executes the illegal card replacement loss-reporting mode: in addition to automatically reporting the loss and being unable to enter the system where the owner has locked the screen, other functions are not restricted, including the ability to make calls and send text messages, which is equivalent to another new system similar to a system clone specially used for illegal card replacement.

According to this embodiment, the mobile phone automatically takes pictures and sends loss report message to the cloud account when it detects that it is being used, including when the mobile phone detects that it is being held by someone and maintained in a static position, or after the power button or HOME button is pressed, or when a specific incoming call or message is received. When the mobile phone is turned on, or when the screen of the mobile phone is scrolled, clicked, etc., it automatically takes photos and sends loss report information to the cloud account.

According to this embodiment, the mobile phone automatically activates location sharing when the owner is near the stolen mobile phone and clicks the automatic location sharing in the cloud account to send instructions to the mobile phone in order to find the mobile phone on site. After the mobile phone side account receives the corresponding control instruction, the mobile phone sends a location sharing request to the cloud account or associated mobile account.

According to this embodiment, the remote control settings of the mobile phone include the owner modifying the battery power shutdown threshold of the mobile phone on the cloud account client to remotely control the mobile phone, and the owner modifying parameters such as the automatic invisible power-on time of the mobile phone on the cloud account client to remotely control the mobile phone. This ensures that stolen mobile phones have more opportunities to be controlled and that the control time is more convenient for the owner.

According to this embodiment, the mobile phone is pushed information, is collaboratively shared by cloud account screen mirroring, is monitored, is listened, etc., which will be described in detail in the following embodiment. In addition, with the above control function, the present invention recommends canceling or modifying the control function of the cloud account remote lock screen in the existing technology.

This embodiment implements multiple technical solutions, which can be optimized and implemented after simulation. The actual implementation (if all mobile phones are fully popularized in the future) may not necessarily implement all technical solutions, but may still achieve the goal of preventing mobile phone owners from worrying about losing their phones.

Similarly, the following embodiments and related inventions of the present invention are also true: there are many factors to consider in practical implementation, and many factors need to be taken into account in software programming and development, but ultimately the user's use needs to be as simple, convenient, and fast as possible.

### Embodiment 2:

Mobile phones have too many functions. If the design is not optimized, it will be cumbersome and troublesome for users to use, so that many users miss settings or fail to set some particularly important security functions. In order to solve this problem, a mobile phone boot-up running program can be developed, so that after the subscriber's card is first inserted into the mobile phone, the mobile phone is powered-on and connected to the Internet, the unique identification data built into the mobile phone (such as the International Mobile Equipment Identity IMEI in the phone) is automatically associated with the unique identification data built into the mobile phone card (such as the International Mobile Equipment Identity IMEI in the card), and the relevant data and the corresponding mobile phone number obtained (some subscriber card operators do not yet support it, then the subscriber card may be changed or the mobile phone number input step may be added) is sent to the cloud server, and the cloud server stores and associates the corresponding data. The difference between this step and the existing cloud account registration is that the cloud account including the mobile phone number as the account name is automatically generated by the program and the registration is fool-proofed when the new machine is turned on and activated.

Then, a guidance dialog box with the characters "Please enter (login and unlock screen) password" or characters with related meanings pops up on the mobile phone screen. While or after the user enters the password, the mobile phone may take a photo and display the photo image or iris (which can be used for face recognition or iris login of the cloud account) and the entered password are sent to the established database with the corresponding mobile phone number as the account in the cloud server and associated with it (due to factors such as iris recognition equipment and collection technology, taking pictures with mobile phones and uploading iris information are optional, that is, it is not necessary to take pictures or upload iris information, or people can be guided to take pictures and upload iris information, in order to warm up for popularization or diversify machine models and related technologies). In this embodiment, it is preferred that the password is both the unlocking password and the login password for logging into the cloud database with your mobile phone number. (If it is needed to be modified, it is need to be modified after unlocking the screen on the mobile phone and uploading it to the cloud synchronously. The cloud modification prompt can be synchronized with the mobile phone or not). Since the legal replacement of the subscriber card requires unlocking the screen, the password is also the password for changing the card, the password for shutting down and flashing the machine (a shared password is neither easy to forget nor easy to confuse, and has many applications in the present invention).

In the next step, the mobile phone guides the recording of the fingerprint information and uploads it to the cloud server. In this embodiment, the cloud account can be logged in via fingerprint. However, before the password-recognizing mouse or keyboard becomes popular (if it becomes popular, cloud account login can even be simplified to one-click login with fingerprint without entering the account name), cloud accounts may need other methods to log in or retrieve the password to avoid passwords being forgotten. In this embodiment, logging in with a password can be chosen. Therefore, in the next step, the mobile phone screen pops up a guidance dialog box with the characters "Please set the answer to the password security question" or characters with related meanings. The password security answer may be entered according to the question, which is used to retrieve, reset or modify the password after forgetting it; the settings are synchronized to the database with the corresponding mobile phone number as the account.

Of course, the mobile phone screen can also pop up a guidance dialog box with the characters "Please enter your email address". At the same time or after the user enters the email address, the mobile phone can take a photo and send the photo image, iris and entered email address to a database which has been established in the cloud server with the corresponding mobile phone number as the account (taking photos and uploading photos, iris optional), the email address entered is also the login code for logging into the cloud database, but it requires activation through an activation email sent by the email server or verification through a verification code. The purpose is also to retrieve, reset, or modify forgotten login and unlock passwords. However, in this step, mobile email addresses and email addresses that require binding to the current mobile phone number are not suitable. If fingerprint-recognition mice or keyboards become popular, email cloud accounts may gradually be phased out.

After completing the above password settings, the mobile cloud account registration is completed. If the owner has a cloud account with the same name and password before, the system will send a message to the mobile phone to prompt that the cloud account has been associated and registered, and just log in.

For a mobile phone registered with a cloud account, when the mobile phone detects abnormal use, the mobile phone executes the corresponding program and sends a loss report to the cloud server.

It should be noted that when implementing the technical solution for quick cloud account registration, not only convenience and speed, but also security precautions need to be considered. The above considers the situation where a small number of login passwords are forgotten. Since the unlocking password and the login password are the same in this solution, the unlocking password is not easy to forget due to frequent use. When actually implementing the present invention, the secret security and other binding settings can be ignored. The embodiment of ignoring the secret security and the embodiment of synchronously sending the mobile phone number and password for registration are not repeated. The technical solution of obtaining a mobile phone number and entering a password to reduce the registration steps is easier to implement than the existing complex cloud account registration technical solution. The relative difficulty lies in uploading the biological unique characteristic password to the cloud account, and the system also needs to add an entry, storage and identification system for the biological unique characteristic password.

Even if the computer does not add a biometric unique feature password entry storage identification device such as a fingerprint recognition sensor, the cloud account can be logged in by relying on multiple emergency contact mobile phones to jointly request verification. Therefore, omitting the password protection and other binding settings and using the same cloud account registration settings for synchronously setting biometric data and passwords is faster for users.

Compared with uploading unique biological characteristics data passwords to cloud accounts, faces and fingerprints in the unique biological characteristics data entered by mobile phones are all existing technologies. Based on the existing technology, it can be developed to detect abnormal use of mobile phones, including: when the mobile phone recognizes different passwords and/or authentication data, as well as the different time of entering password data, it will enter different working states and related procedures.

The working status includes decrypting and unlocking the mobile phone screen, entering different interface pages, performing normal work or reporting lost, etc.

Refining the implementation of entering different working states for different mobile phone identification data passwords will bring different intelligent identification technology effects.

The mobile phone implementing this embodiment has outstanding selling points, does not omit important functions, and can provide customers with a more convenient, faster and safer experience.

### Embodiment 3:

In order to increase the probability of reporting a lost or stolen mobile phone and reduce the trouble for legal users in actual use, the following technical upgrades can be performed on the existing cloud account system.

The cloud server in this embodiment is a cloud system that has created a cloud database and related operating programs. The cloud database can include various unique identification data built into the mobile phone that have been entered before leaving the factory. The related operating programs include receiving, there are various subroutines for processing mobile phone data such as association, saving and sending. The subroutines for processing mobile phone data include various controls of the mobile phone.

This cloud server management system can be divided into a variety of innovative technical solutions. Various unique identification data built into the mobile phone are entered before the mobile phone leaves the factory. It can not only track the whereabouts of new mobile phones that have not been sold to consumers but have been illegally used, but also the whereabouts of key accessories after the mobile phone has been disassembled into parts and the key accessories have been illegally used.

In addition, this cloud server management system uses biometric technology to log in to cloud accounts, which not only prevents unexpected and illegal logins caused by forgotten passwords and leaked verification codes in existing login methods, but also makes logging in more convenient, faster and safer.

In addition, during the cloud account upgrade process, it is necessary to consider whether the mobile phone user has a cloud account before. If the user has a cloud account that can be associated before, the login can be differentiated based on the difference between the current account password and the previous account password; if the account passwords are the same, the cloud server logs in to two or more cloud accounts at the same time, and the system will automatically distinguish them by labeling "New" or "Old" or via the time.

Therefore, in order to increase the security of cloud accounts and make them difficult to hack, we can draw on the distinction between new and old cloud accounts and consider adding a pre-identifier or post-identifier that the owner will not forget to the account name based on the mobile phone number. The identifier is preferably a letter.

In actual implementation, there are many issues that need to be considered, and those that are not closely related to the subject matter of the present invention will not be discussed in detail one by one.

The cloud server backend has greater authority, but requires two or more people to log in and implement multi-level management to provide excellent services to cloud customers. For example: entering unique data such as the International Mobile Equipment Identification Code, satellite navigation chip identification code, WIFI network card MAC identification code, Bluetooth address code, as well as mobile phone number, security question, email address, etc. to view the information records of each time the mobile phone is connected to the Internet, and/or the positioning and other information sent to the cloud account by the mobile phone at scheduled times N times per day.

If an error occurs in the cloud account or the cloud account is stolen and logged in, the cloud server background will accept the complaint from the mobile phone customer.

The cloud server client can also implement multi-level management through different encryption or verification, such as face encryption, double fingerprints, other biometric multi-level passwords, and emergency phone verification codes for contacting relatives and friends to gradually enter the cloud account to find relatives and friends. However, the implementation of cloud accounts involving biometric passwords requires a longer period of time.

The corresponding cloud server can also be preset with standardized and personalized reminder screens or messages for stolen or lost mobile phones, which can be pushed by the owner. The cloud server can also be equipped with the above command buttons and remote control system, and subsequent retrieval is omitted. However, in order to obtain more information about illegal users, the mobile phone should not be locked as much as possible.

Furthermore, the cloud server can be connected to the Internet to alarm with one click, and can also control stolen and lost mobile phones to send location sharing implementation methods to designated mobile phones, so as to facilitate remote search and tracking using value-added services provided by the police or mobile phone manufacturers.

Although location sharing has been implemented in a variety of mobile APPs and can achieve persistent location sharing, due to various reasons, not all mobile phone users will set location sharing to be permanent. Therefore, using a cloud account to manipulate the phone in real time to achieve location sharing is a remedy for lost phones. Of course, if the real-time location sharing request is synchronized and self-started when the mobile phone is reported lost or automatically turned on to report lost, location sharing can also be better achieved to find the mobile phone.

In short, the cloud account is equivalent to the invisible bodyguard and nanny of the mobile phone. In addition to the functions listed above, more data, processing, and functional modules can be added according to needs to become the remote control of the mobile phone.

### Embodiment 4:

After the mobile phone is powered on by inserting the card for the first time and connected to the Internet, the owner only needs to follow the mobile phone's guidance prompts and enter the fingerprint. Important functions such as cloud accounts, lock screen, report loss and theft prevention, and interface menu hierarchical management can be automatically generated. However, in order to deal with special situations where fingerprint mice or keyboards are not yet popular, the mobile phone will also guide the user to enter data such as unlocking and/or login password and/or emergency contact mobile phone number.

Since programs such as data acquisition and association, number binding, and intelligent identification of abnormal usage have been built into the security system of the mobile phone. After entering the above data during boot-up, the mobile phone of this embodiment can be used with confidence.

Once a thief or robber steals a mobile phone, he usually turns off the mobile phone or pull out the card after stealing it. After the mobile phone is stolen, the stolen mobile phone will take a hidden photo and upload the photo of the thief or robber, then make a high alarm sound or call loudly such as "Help, catch the thief;
If the mobile phone is lost or the thief fails to turn it off, the legal owner can report the loss of the lost phone through the cloud account or the emergency contact phone (when setting up the emergency contact phone, a text message containing a loss report instruction will be sent to the emergency contact phone). After reporting the loss of a mobile phone, even if the mobile phone is operated normally, it will send a loss report message containing photos and be controlled;
If a thief or illegal user succeeds in replacing the card, the mobile phone will not only be reported lost, but will also be controlled, and even the mobile phone bills and/or traffic of the illegally used number will be consumed;
If the illegal user does not replace the card but only uses WIFI, the phone will also be reported lost and monitored. It can even be set to occur in the middle of the night, so that the illegal user will be awakened by a terrifying howl while sleeping.

If the illegal user does not replace the card or actively connect to WIFI, the mobile phone will automatically search for free WIFI or will automatically search for free WIFI after being reported lost to achieve control.

Of course, once the mobile phone leaves the owner and is illegally possessed by others, there will be other scenarios. For these scenarios, the mobile phone and cloud account have been pre-configured with intelligent response measures as much as possible, but not all of them are described here.

However, strict measures against illegal users should be taken as much as possible after obtaining sufficient information from the illegal users and issuing warnings and network alerts. These will be explained in the anti-theft strategy of the cloud account.

### Embodiment 5:

legal owners can find the cloud system of the brand's mobile phone online. After opening it, touch the fingerprint sensor on the mouse or enter the mobile phone number and touch the fingerprint sensor or enter the mobile phone number and password to enter the cloud account.

In the cloud account, the legal owner can not only check the movement trajectory of the stolen or lost mobile phone, report the loss, control the mobile phone and alarm with one click, but also query, process and interact with his own synchronized information. In other words, two or more systems are developed in the cloud account. One is the security system that matches the mobile phone, and the other is the information storage, social interaction and other application systems associated with the mobile phone, which correspond to the dual or multiple systems in the mobile phone. For example, the mobile phone interface and menu can be displayed in the cloud account, the mobile phone can be operated synchronously, and operations such as editing reports, documents or movie screens that are inconvenient on the mobile phone can be performed.

### Embodiment 6:

Then a mobile phone startup and running program is developed so that after the subscriber's card is first inserted into the mobile phone and the mobile phone is connected to the Internet, the built-in processing program of the mobile phone automatically binds the unique identification data built into the mobile phone card and binds the obtained corresponding mobile phone number. The mobile phone number is actually the owner's local number (preferably the same number as the one number dual-terminal watch or glasses phone). Compared with the current existing technology, this step does not require any settings and is completely automatically completed by the program.

The mobile phone that automatically completes the above binding will dial the owner's local number regularly after the card is illegally replaced. In this embodiment, the time for scheduled dialing by the mobile phone is preferably 11 pm or 7 am or around 12:30 noon.

This technical solution can be called a fully automatic reporting loss and anti-theft technology for mobile phones. Its advantage is that it can be factory-integrated into the mobile phone. After the legal owner of the mobile phone inserts the subscriber card, it does not need any operation to have the anti-theft function, and the legal owner can report illegally to illegal mobile phones. After the legal owner of the phone has issued a request for return that is not accepted by the illegal user, the legal owner can monitor or keep the illegal user on hold for a long time in order to consume the illegal user's phone bill.

The implementation idea of this technical solution is to let the program do as much as possible the functions that can be automatically executed. This not only leads to better technological innovation, but also avoids relevant patent barriers. This technical solution is worthy of publicity for mobile phone manufacturers that can legally implement it. Not only can it greatly increase the probability of returning a lost mobile phone, but also give a psychological shock to the criminals who steal or pick up phones and do not want to return them.

The technical solution can also further develop another mode of monitoring using a mobile phone cloud account, which involves clicking on the call back phone monitoring menu in the cloud account to control the mobile phone. After receiving the control instruction, the mobile phone automatically and invisibly dials the owner's own phone number to implement monitoring that costs the illegal user's phone bill. (It is recommended to control the mobile phone after the card has been illegally replaced. It is not recommended to use this method before illegally replacing the card, as it automatically dials other emergency contact numbers and costs the owner's phone bill.).

Of course, in order to ensure that the mobile phone can be discovered in time when it is illegally used or lost, the screen of the mobile phone will also pop up a guidance dialog box with the characters "Please enter the emergency contact phone number" or characters with related meanings (such as emergency contact WeChat ID or QQ number), after the user enters the mobile phone number, the mobile phone number will be saved in the memory for emergency messaging and dialing. The mobile phone number can also be sent to the database that has been established in the cloud server with the corresponding mobile phone number as the account, and is used to receive the verification code as the login code for other login methods of the cloud account and multiple emergency contact mobile phone login methods. Logging in to the cloud account with the emergency contact phone number, and using the verification code to view the phone's location track, is convenient for finding missing persons in a timely manner.

The mobile phone screen can also pop up other more important guidance characters and upload the data after input, so that it can be queried when forgotten or used for other purposes. The quotations should be as detailed, concise and clear as possible so that consumers can understand them at a glance, and the steps to guide the setting of the above mobile phone functions should be as simple as possible.

After the mobile phone is guided to enter the loss report number and binds it, when the mobile phone detects abnormal use, the mobile phone dials the bound number and/or sends the loss report message.

According to this embodiment of quick binding loss report and anti-theft, the loss report information sent by the mobile phone may include various remote control operation command sets for the mobile phone itself, so that the mobile phone reporting loss can control the lost or stolen mobile phone.

### Embodiment 7:

After the emergency contact mobile phone receives the loss report message containing the remote control command set, it can send the information remote control command to remotely control the stolen or lost mobile phone.

The mobile phone terminal of this embodiment is pre-equipped with a processing system for receiving data instructions, which can perform a number of processes according to data instructions pre-set and sent by the cloud server or emergency contact mobile phone (including remote control instructions such as Beidou navigation SMS and WIFI), such as invisible self-starting (built-in clock and its power supply support the mobile phone to be turned on at a fixed time or every N hours, automatically turn on and off at a fixed time period, automatically turn on the mobile phone and enter an invisible standby state, preferably automatically shut down after 5 to 10 minutes), loss-reporting, positioning, listening, monitoring, recording, taking photos, taking videos, locking, uploading data, power display, fingerprint acquisition, deleting data, restricting flashing, warning notification, warning sound, remote control or timing sending of location sharing information, consuming mobile traffic of illegal users, etc.

To put it simply, if the lost mobile phone meets the trigger conditions, it can achieve invisible timing control and location tracking of the lost or stolen mobile phone. The timing shutdown can extend the invisible standby time, increase the opportunity for control, and increase the probability of control.

The premise for timing or charging the mobile phone to start up is that the mobile phone is illegally delayed to shut down or the mobile phone is forced to shut down after the battery power of the mobile phone is lower than the threshold, or the blocked mobile phone is forced to automatically shut down to save power after it cannot search for signals within a certain period of time (because the mobile phone automatically enters a loss status of waiting for invisible timing start after being blocked and shut down).

Charging invisible power on can provide more sufficient power when the mobile phone is being listened or monitored.

In short, after the stolen or lost mobile phone is illegally used by an illegal user, it becomes a cloud-like mobile phone that can share its location and is automatically controlled and/or remotely controlled by a cloud account or a mobile phone reporting loss (first, second and third level control based on the illegal use). It can also be used as a remote monitor for recording, taking photos, and video (need to consider malicious lending and gifting behaviors), and the consumed traffic and phone bills make illegal users lose more than they gain.

To prevent mobile phones with listening and monitoring functions from being maliciously and illegally used, the use of monitoring and surveillance functions needs to meet certain conditions. When developing this function, consider linking it to the one-click alarm of the cloud account, that is, the activation of the monitoring function of the mobile phone needs to be turned on after the one-click alarm. Similarly, as long as the cloud account's other control functions of the mobile phone may be maliciously and illegally used, certain process conditions may be considered during program development. Even if a mobile phone is stolen, following reasonable and legal procedures and taking necessary measures while obtaining legal evidence will greatly increase the chance of getting the mobile phone returned.

In fact, there are many situations where mobile phones are used abnormally. As long as the determination of abnormal use is well developed, that is, the mobile phone has the ability to intelligently identify abnormal use, it can be detected in time when the mobile phone is used illegally or is lost.

In this embodiment, every time the mobile phone is turned on, it automatically detects whether the International Mobile Customer Identity Code and/or other built-in unique identification data in the mobile phone card are consistent with the International Mobile Customer Identity Code bound in the mobile phone. If they are consistent, the mobile phone uses all functions normally; if inconsistent, the mobile phone will automatically dial and/or send information invisibly (including location information if a mobile phone number location sharing program is preset or developed or 5G messaging is activated) to the emergency contact phone (It is also possible to set up in advance or set up via a cloud account and control invisible calls to a voice station number or scheduled calls to a designated mobile phone controlled by the original owner, consuming the mobile phone bills of illegal users.)

In view of this, it is recommended to have at least two called numbers, one is an emergency contact mobile phone number (not the other number in the dual-card mobile phone), with automatic or passive dialing preferably being 3 to 6 times, in order to prevent subsequent harassment of relatives and friends; the other is the number of the owner of the bound phone, set to call regularly, call at intervals of days in the later period, and send a loss report message, allowing long-term listening after receiving the call from the caller who refuses to return after warning, and timely detection of illegal use of the stolen mobile phone after hiding for a long time.

### Embodiment 8:

From the analysis of the criminal psychology of illegal users, especially those who intentionally steal mobile phones: professional thieves who steal mobile phones not only aim to illegally sell them for money after obtaining them, but also try their best to obtain more information from the owner in order to obtain greater illegal benefits.

Therefore, the present invention goes against this trend and provides a loss-reporting and anti-theft mobile phone that can obtain the information in the illegal user's subscriber card by pretending to lose it. The operation of the mobile phone in this embodiment includes the following steps:
After the mobile phone is powered on by inserting the card for the first time and connected to the Internet, the built-in processing program of the mobile phone will automatically bind the unique identification data built into the mobile phone card, and bind the obtained corresponding mobile phone number and/or guide the input and binding of the loss report number;
when the mobile phone detects that the unique identification data built into the subscriber card is inconsistent with the bound identification data, the mobile phone can be used normally, but it cannot enter the locked screen interface and performs a secret report of loss and/or control (dual user interface for legal users and illegal users).

In this embodiment, when the mobile phone detects that the unique identification data built into the subscriber card is inconsistent with the bound identification data, in addition to being able to be used normally, the mobile phone can also automatically read or synchronize in real time or be controlled to retrieve the information in the subscriber card and sent it to the mobile cloud account.

In this embodiment, normal use of the mobile phone may include making calls, sending and receiving messages, downloading new APP, registration and login APP, etc.

In this embodiment, the implementation method of remotely controlling the cloud account to retrieve the information in the mobile phone card or the mobile phone sending the information in the mobile phone card to the cloud account can also be used as a separate technical solution for theft prevention and loss-reporting of the mobile phone.

### Embodiment 9:

The important purpose of the above embodiments is to focus on the legal owners of the mobile phone to adhere to the principle of not disclosing personal information, that is, try their best to encrypt and lock the stolen and lost subscriber cards, and how to obtain relevant information of the illegal user. It is more of a battle of attack and defence of personal information than a battle of tracking down stolen and lost mobile phones. The end stage of this battle still involves information warfare.

Therefore, the present invention also provides a design process for pushing warning information to a mobile phone from a cloud account first in a "diplomacy before violence" manner. In this design process embodiment, after the cloud account receives the illegal user's mobile phone number, photo, location and other information, the cloud account displays a page for editing the warning information. The legal user selects or fills in the relevant information according to the prompts or guidance, the information is pushed to the desktop of the stolen or lost mobile phone in sequence.

For example, the information pushed at the beginning of the period can be: "Friends! The mobile phone you are using is a stolen mobile phone, and your relevant information is currently in the possession of the original owner of the mobile phone. In order not to cause you any major trouble, please send this mobile phone to a certain customer service station within two days, and you can receive the corresponding fee...".

Another example is that the subsequent push information can be: "Friends! Because you did not send this stolen mobile phone to a certain customer service station on time, the system will take certain measures on the mobile phone. Please send this mobile phone to a certain customer service station immediately, otherwise more adverse consequences will be caused to you...." After the message is pushed, the mobile phone starts a program to lock the subscriber's card.

According to the information in the above example, it can be seen that in the design process of this embodiment, the cloud account pushes warning information to the mobile phone in a "diplomacy before violence" manner, which means that when the information is pushed for the first time, no control instructions such as interfering with illegal users or locking are sent;
According to the information in the above example, it can be seen that the design process of this embodiment and the sequential pushing of information to the stolen or lost mobile phone desktop can be completed in one go, and the cloud account will send it in sequence in a scheduled manner.

In addition to pushing text information, picture information can also be pushed, especially pictures of illegal users, which will bring psychological uneasiness and fear to the illegal elements.

In addition, it needs to be emphasized again that no matter whether the legal owner sends instructions or pushes information to the stolen mobile phone, the legal owner's mobile phone number and other important information cannot be displayed on the mobile phone. Otherwise, the technical solution to which it belongs will have flaws, which is also the importance of invisible loss-reporting. However, the invention does not limit the protection of non-invisible loss-reporting technical solutions.

For example, customized text message transfer information is induced to obtain illegal users' bank card numbers, WeChat, Alipay accounts, etc.

Of course, in addition to pushing warning messages through cloud accounts, warning messages can also pop up automatically after a lost or stolen mobile phone sends the illegal user's mobile phone number, photo, location and other information. In addition, in order to prevent the mobile phone of the present invention from being maliciously reported and sending information, the mobile phone with the physical subscriber card illegally removed will automatically emit prompt voice and/or prompt graphics after certain time intervals. The duration of the time intervals is recommended to be longer than the time period for the mobile phone to automatically power on invisibly.

In addition to pushing information, developing cloud account one-way video phone or directly one-way initiating call and mobile phone intercommunication applications is a continuation first with courtesy and then with force to remotely control stolen mobile phones. The cloud account one-way initiated call or high alarm tone cannot be hung up, muted, or adjusted on the mobile phone side.

The above embodiments contain more than one independent technical solution, and most of them contain multiple technical solutions. These technical solutions can be implemented separately or in combination, and after combination, many different embodiments will be formed, which in turn constitute different technical solutions.

Below are preferred combined embodiments from the perspective of use, which not only play a relatively multi-dimensional role in reporting loss and anti-theft, but also are convenient and fast for consumers to use and operate.

### Embodiment 10:

In the prior art, in order to protect the security of the information of relatives and friends in the mobile phone book of a stolen or lost mobile phone, a solution is adopted to hide the incoming call information when a call is received. However, since the mobile phone can still be connected, the solution to hiding the caller information is not perfect if the thief is trying to defraud.

This embodiment is relatively simple, as it only requires the phone to be reported lost and then adopt a technical solution in which all incoming calls are blocked except for emergency contact numbers, or transferred to emergency contact numbers, or the system responds with "shutdown and cannot be connected" and no incoming call is display.

### Embodiment 11:

The present invention also provides an embodiment of a mobile phone with Do Not Disturb, specifically creating a malicious blacklist on the mobile phone. The mobile phone does not ring for incoming calls in the malicious blacklist and automatically answers them. During the answering process, the microphone is turned off;
Furthermore, users can add malicious caller numbers to the malicious blacklist with one click;
Going one step further, when the mobile phone receives an incoming call from the malicious blacklist, operations other than making calls will not be affected.

Similarly, there is another way to implement Do Not Disturb on mobile phones. When there is an incoming call, in addition to the options of answering and hanging up, an additional option of "answering without microphone" can be added. When the user selects this option, the microphone of the phone will be turned off during the call;
Furthermore, when there is an incoming call on the mobile phone, in addition to the options of answering and hanging up, an additional option of "secretary answering" can be added. When the user selects this option, an intelligent voice robot will engage in conversation with the caller of the harassing phone call.

"Secretary answering" can also convert relevant important voice information into concise text or text speech, which is convenient for the owner to read or listen and determine whether to answer the next call or add it to the blacklist; in addition, in the call settings menu, a submenu is added for the "secretary answering" subdivision function. For example, except for emergency calls from relatives and friends, all incoming calls in a certain time period are "secretary answering"; or all unknown calls, etc.

Furthermore, after the user selects the "secretary answering" option, the mobile phone displays a variety of voice conversation scenarios for the user to choose from.

If all mobile phones adopt this seemingly simple and crude Do Not Disturb function, harassing calls will be greatly reduced.

### Embodiment 12:

The present invention further provides a comprehensive embodiment: a subscriber card with loss-reporting and anti-theft function is inserted into a dual-card anti-theft and anti-lost mobile phone with a built-in eSIM card (the operator does not support calls and text messages and only supports mobile networks). After the mobile phone is turned on, the mobile phone locks the PIN code of the physical subscriber card and guides the modification. The modified password is both the lock screen password and the login password of the cloud account; then the mobile phone obtains and binds the mobile phone number corresponding to the subscriber card as the loss report number, and can optionally guides another mobile phone number as the loss report number; then the mobile phone registers the number as a cloud account; then the mobile phone guides the user to enter the lock screen fingerprint and sends both the fingerprint and password to the cloud account. The fingerprint can also be the login fingerprint of the cloud account.

In this embodiment, the mobile phone robot secretary answering can be realized by the built-in software of the mobile phone, and multilingual dialogue scenarios can be downloaded. The robot secretary answering can selectively answer the call from the owner, and can automatically block unpolite call numbers. The blocked calls will be automatically connected, but no voice will be sent and no sound will be made.

Based on the above description, it can be seen that after turning on the mobile phone, only the password needs to be input and entered, and the basic security settings of the mobile phone can be completed.

If the mobile phone user also has a watch phone that can be paired with the mobile phone, the above optional guidance input can also set the watch phone number as a loss report number.

If the distance between the mobile phone and the watch exceeds the threshold, both the watch and the mobile phone will sound an alarm.

If the sensitivity of Bluetooth is not enough and the mobile phone is accidentally stolen, whether the thief turns off the mobile phone or takes out the card, the mobile phone will start the lost report process and send the thief s photo and location to the loss report number and cloud account. When the phone owner or relatives or friends receive the loss report information, they will decide whether to activate the high alarm sound based on the location.

Assuming that the location is far away and the high alarm sound has no effect, then wait for the mobile phone number, photos, location, video and other information related to the thief.

If a thief takes out the subscriber card and puts it into his own mobile phone, the subscriber card will activate the anti-theft program. After the subscriber card's loss report number receives information related to the thief, the subscriber card and the thief s mobile phone will be locked.

If the thief transfers or gives the mobile phone to other illegal users, the cloud account and the loss report number will receive information related to the illegal user by replacing the card and reporting loss. After receiving the relevant information, the legal owner can push warning messages to illegal users through the cloud account and raise the alarm with one click.

Assuming that the pushed alarm information is useless and the illegally used mobile phone card has been locked or the mobile phone bill has been consumed, the legal owner can control the mobile phone to automatically turn on late at night and make harsh noises through the network provided by WIFI or the built-in eSIM card.

If the above measures fail to enable return of the mobile phone, the cloud account can be activated to control the mobile phone to be listened and monitored.

If the mobile phone has been abroad and the alarm, late-night noise, and listening and monitoring are useless, the owner can send a command to self-destruct the mobile phone.

In addition to the above description, this embodiment of mobile phones, as smart tools with precise manufacturing, can be designed to have loss-reporting function in many links, including normal use within a certain range, and even any abnormal use link. For example, during the illegal user tries to restore factory settings illegally, disassembles or reboots the phone illegally (Recovery, Fastboot), a covert loss report can be triggered. In addition, the owner can log in to the cloud account and click on the "Loss Report" menu to send a loss report command to the phone in one click.

The carrier reporting loss can be a mobile signal, mobile network, or further, when no free WIFI is recognized, the mobile phone guides the connection to the encrypted WIFI to perform covert loss-reporting and anti-theft; and without connecting to the mobile network or WIFI, the phone can covertly activate GPS and other positioning for reporting loss and anti-theft.

In addition, with the development of science and technology, the sensitivity of finger veins, vein palmprint recognition, iris recognition, voice fingerprint recognition sensors, odor recognition sensors, heartbeat recognition, etc., as well as the convenience and safety of applications, can be improved. Smartphones can be used to prevent theft and report loss, and even assist AI intelligence to identify legal or illegal use based on usage habits.

Since this embodiment is a combined embodiment, different mobile phone R&D and manufacturing companies can use implement core technical ideas of the present invention and the patent documents submitted by the applicant including automatic lock, boot instructions, guide entry, synchronous password change, quick registration, automatic binding, synchronization settings, Bluetooth companion, abnormal loss report, false shutdown, delayed shutdown, registered anti-theft, threshold shutdown, invisible startup (the built-in clock and its power supply support scheduled startup of the mobile phone, furthermore, after startup, it can also be remotely controlled through the cloud account to modify the next scheduled power-on time of the mobile phone), hierarchical interface, anti-opening, playing hard to get, one-click loss report, secret control, anti-flush loss report, warning push, security warning, one-click alarm, eSIM card phone loss report, encrypting the QR code of the phone number, reporting the loss of the subscriber card, locking the phone of the thief, locking the subscriber card of the illegal user of the lost phone, etc. in different combinations in different brands, models, systems, architectures, etc. These combinations may vary, but as long as they are based on the core technical ideas of this invention, as long as one of the technical solutions derived from them is equivalent or inferior to the innovative technical solutions of this invention, they belong to the scope of protection required by this invention.

In short, the features of this invention may include the idiot-proof setting and use of mobile phones, and the intelligent security of mobile phones and their owners., and to provide the harassment-free technology to fight evil with evil.

The focus of the present invention is not only to obtain the location of the lost mobile phone, but also to use technical means to obtain as much information as possible about the illegal user or holder, including facial photos (usually obtaining location information alone is not enough to deter illegal users or holders, and also it is difficult to recover the mobile phone), and make illegal users or owners feel the trouble and distress of illegally possessing other people's mobile phones.

In summary, the present invention overcomes the idea of making a lost or stolen mobile phone bricked and unusable, but allows the mobile phone to obtain as much tracking information as possible during illegal use on the premise of better protecting the privacy of the owner. It can be said that the present invention is based on the existing communication technology, through subdivided logical thinking method, and from the perspective of security, gradually decomposes the world's difficult problem of mobile phones that are not afraid of being stolen and lost, and reduces the big problem into small; and starting from the thinking of illegal users, illegal holders, and thieves, imagines the scenarios of abnormal use of mobile phones and overcome problem comprehensively and one by one. The present invention can be introduced to the market one by one from the application level, then go deep into the underlying restructuring system, and then go deep into the chip, and finally develop an anti-theft and anti-lost mobile phone with excellent security standard implementation effect and cannot be cracked.

The safe mobile phone of the present invention that is not afraid of being stolen or lost is not only the owner's personal communication tool, but also the owner's private invisible bodyguard. In the hands of illegal users or illegal holders, it can be tracked and remotely controlled monitors and eavesdropping devices, which is a "hot potato"; the cloud account registered with a secure mobile phone is not only a privacy backup box for the owner, but also a security guard for the mobile phone. The present invention binds the owner's password information to the mobile phone and the cloud account through the quick boot setting of the mobile phone. The mobile phone identifies whether the owner is legally using it or others are using it illegally through multiple scenarios to determine the intelligent report of loss to the cloud account. After years of thinking and contemplation, dozens of innovative technical solutions and embodiments were developed. Once these technical solutions and embodiments are disclosed in the present invention, they will be obvious to those skilled in the art, and those skilled in the art, under the guidance of the technical principles and technical problems solved by the present invention, can develop more embodiments and practical products that are not completely consistent. As long as these practical products do not deviate from the spirit or scope of this application, all equivalent technical solutions, including deliberately inferior technical solutions, are consistent with the broadest technical scope that is consistent with the principles and innovations applied in this application.

It is precisely because this invention is a series of multiple innovative solutions that the specification and embodiments of the present invention are relatively complex in the case of claiming priority. In addition, individual embodiments may emphasize a particular technical solution, resulting in contradictions and conflicts in the order or technical features that overlap repeatedly. Therefore, it is necessary to interpret them from the perspectives of technical principles, technical inspiration, and macroscopic considerations in combination with auxiliary technical solutions.

The present invention not only provides numerous technical solutions, but also provides multiple forward-looking technical principles and enlightening solutions. According to these solutions and methods, the detailed implementation will greatly improve the intelligence and security of mobile phones. No one will easily use a stranger's or unknown mobile phone, and over time, the malicious occupation of mobile phones after being lost will be eliminated.

The technical principles and solutions of the present invention and related inventions can be applied not only to mobile phones, but also to other terminal devices such as laptops, tablets, trackers, or movable items such as vehicles, drones, etc., to achieve the goal of "Thieves nowhere" for more products.

## Claims

1. An implementation method for remote control of a mobile phone after the mobile phone is stolen, **characterized by** comprising:
for a mobile phone that has registered a cloud account and logged into a mobile phone side account, logging, by an owner of the mobile phone, into the cloud account, and operating the cloud account to send a control signaling to the stolen mobile phone when the owner confirms that the mobile phone is stolen;
executing, by the stolen mobile phone, corresponding remote control programs after receiving the control signaling;
the remote control programs comprise at least one or any combination of the mobile phone being reported lost, being automatically enabled for location sharing, being remotely set, being pushed information, being collaboratively shared with cloud account screen mirroring, being called, being one-way smoothly connected and/or being intercommunicated, being listened, and being monitored.

2. The method according to claim 1, **characterized in that** the cloud account further comprises a mobile phone theft prevention guide or instructions for using the cloud account to control the mobile phone.

3. The method according to claim 1, **characterized in that** the control signal comprises a signal instruction and a push information, the signal instruction comprises a single instruction and a concurrent instruction, and the push information comprises a text, a picture, a voice, and a video multimedia information.

4. The method according to claim 1, **characterized in that** the mobile phone being reported lost comprises:
after the mobile phone side account receives a loss report instruction sent by the cloud account, the mobile phone enters a loss report state;
when detecting that the mobile phone is being used, the mobile phone automatically takes a photo and sends a loss report information to the cloud account.

5. The method according to claim 4, **characterized in that** when detecting that the mobile phone is being used, the mobile phone automatically taking a photo and sending the loss report information to the cloud account, comprising steps of:
when detecting that the mobile phone is being used, in response to detecting that the mobile phone is tilted horizontally to a certain angle, or is manually grasped and maintained in a static position, or a power button or HOME button is pressed, or a specific incoming call or message is received, or the mobile phone is turned on or a display screen of the mobile phone is scrolled or clicked, the mobile phone automatically taking the photo and sending the loss report information to the cloud account.

6. The method according to claim 1, **characterized in that** automatically enabling location sharing comprises:
after the mobile phone side account receives a corresponding control instruction, the mobile phone sends a location sharing request to the cloud account, an associated mobile phone side account or a social account.

7. The method according to claim 1, **characterized in that** the system corresponding to the cloud account comprises a mobile phone manufacturer side and a mobile phone cloud account client, and the mobile phone cloud account client comprises a multi-level management login interface and corresponding function menu and/or related pages, the mobile phone cloud account client comprises a menu for remote control of the mobile phone and/or a pop-up box for steps of guiding the corresponding control.

8. The method according to claim 7, **characterized in that** the mobile phone cloud account client comprises a dynamic menu of the phone, which stores a certain amount of received photos, videos, locations and other information in a cyclic manner.

9. The method according to claim 7, **characterized in that** the mobile phone cloud account client comprises a one-click networking alarm function.

10. The method according to claim 7, **characterized in that** the mobile phone cloud account client further comprises at least one of control suggestions after the mobile phone is stolen, corresponding information push, corresponding parameter setting signaling push, and sending function menus for loss report instructions to the mobile phone side account, sending function menus for location sharing instructions to the mobile phone side account, one-way call initiation, one-way smooth connection and/or mobile phone intercommunication functions, collaborative sharing with mobile phone screen mirroring, and activating listening and monitoring functions of the mobile phone when conditions are met.

11. The method according to claim 7, **characterized in that** the cloud account uses multiple emergency contact mobile phones that have been stored in the cloud account to jointly request verification login.

12. A method for loss-reporting and anti-theft of a mobile phone based on quick registration of a cloud account, **characterized in that** the method comprises:
when the mobile phone is powered on for networking after inserting a card for a first time or writing a virtual subscriber card number into the mobile phone, the mobile phone obtaining a phone number corresponding to the subscriber card, and storing a corresponding password and/or biometric unique feature data entered by a guide in the mobile phone as a mobile phone unlocking password and/or or loss-reporting identification data;
wherein, the mobile phone sends the obtained mobile phone number and the corresponding password after guided entry to the cloud server;
the cloud server storing the received mobile phone number and associating or generating a cloud account whose account name contains the mobile phone number;
the cloud server associating the received password data with the login password of the cloud account;
registering a cloud account with the mobile phone and logging in to a mobile phone side account simultaneously;
when the mobile phone detects abnormal use or is reported lost, the mobile phone executes the corresponding program and sends a loss report information to the cloud account; when the mobile phone is used normally, the relevant information on the mobile phone side is connected to the cloud account for backup.

13. The method according to claim 12, **characterized in that** the login password of the cloud account comprises a first-level login password and a second-level login password.

14. The method according to claim 12, **characterized in that** when the screen of the mobile phone is locked by a password, the home screen is not locked.

15. The method according to claim 12, **characterized in that** the detection of abnormal use of the mobile phone comprises: the mobile phone recognizing different passwords and/or identification data, and/or the corresponding time of inputting the password data into the mobile phone being different, entering states that are not exactly the same.

16. The method according to claim 12, **characterized in that** after the mobile phone is shut down due to abnormal use or when the power supply falls below the threshold, when the built-in clock reaches the set time, the mobile phone automatically turns on without the screen being displayed and making no sound, and sends loss report information, accepts being controlled.

17. The method according to claim 12, **characterized in that** after the mobile phone is shut down due to abnormal use or when the power supply falls below the threshold, when a charging signal is detected by the mobile phone, the mobile phone automatically turns on without the screen being displayed and making no sound, and sends loss report information, and/or enters a being listened and monitored state by the cloud account.

18. The method according to claim 12, **characterized in that** when the mobile phone is invisibly automatically powered on and reported as lost, the mobile phone automatically initiates a shared real-time location request synchronously or subsequently.

19. An anti-theft and loss-reporting mobile phone that can quickly bind a loss report number, **characterized in that** implementation steps for binding the loss report number to the mobile phone comprise:
when the mobile phone is powered on for networking after inserting a card for a first time or writing a virtual subscriber card number into the mobile phone, binding the corresponding mobile phone number obtained by the mobile phone, and/or guiding a user to enter an emergency loss report number and bind the emergency loss report number;
when the mobile phone detects abnormal use, the mobile phone sends a loss report information and/or dials the bound number;
wherein the abnormal use of the mobile phone comprises:
the mobile phone being entered with a password data that does not match the mobile phone's already entered password data,
the password data being not entered into the mobile phone after timeout,
the mobile phone being attempted to shut down illegally,
the mobile phone being attempted to illegally remove the card,
the card of the mobile phone being illegally replaced,
the mobile phone being attempted to being illegally flashed,
the mobile phone being attempted to being illegally disassembled,
the mobile phone being illegally answered, and
all use of the mobile phone after being reported lost;
the bound number and/or emergency loss report number are unbounded after being decrypted through an unlocking or encryption menu.

20. The mobile phone according to claim 19, **characterized in that** the mobile phone further comprises a program for avoiding harassment, which comprises:
in addition to options of answering and rejecting a call on an incoming call interface of the mobile phone, options of "answering without sending call" and/or "secretary answering" being added;
after a mobile phone user selects the "answering without sending call" option, the mobile phone answers the incoming call but turns off a microphone and/or a speaker;
moreover, an automatic connect blacklist is added to the mobile phone address book, when a number on the automatic connect blacklist calls, the mobile phone automatically answers the call but turns off the microphone and/or the speaker;
after the mobile phone user selects the "secretary answering" option, a voice robot answers the incoming call and talks to the caller, and converts relevant important voice information in the call into text;
wherein the voice robot has the logical ability to judge malicious calls and automatically add malicious calls to the automatic connection blacklist;
furthermore, after the user selects the "secretary answering" option, the mobile phone displays a variety of voice conversation scenarios for the user to choose;
when the "secretary answering" and/or "answering without sending call" work, other operations of the mobile phone other than calls are not affected.
